(19) Europäisches Patentamt
European Patent Office
Office européen des brevets

(11) EP 4 714 541 A2

(12) EUROPEAN PATENT APPLICATION

(43) Date of publication:
25.03.2026 Bulletin 2026/13

(21) Application number: 25209362.0

(22) Date of filing: 22.03.2021

(51) International Patent Classification (IPC):
*B01J 29/06* (2006.01)

(52) Cooperative Patent Classification (CPC):
C01B 37/005; B01J 29/061; B01J 29/405; C01B 39/085; Y02P 20/52

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA

(30) Priority: 23.03.2020 EP 20164934

(62) Document number(s) of the earlier application(s) in accordance with Art. 76 EPC:
21712203.5 / 4 126 763

(71) Applicant: BASF SE
67056 Ludwigshafen am Rhein (DE)

(72) Inventors:
- Parvulescu, Andrei-Nicolae
67056 Ludwigshafen am Rhein (DE)
- Riedel, Dominic
67056 Ludwigshafen am Rhein (DE)
- Kostur, Milan
67056 Ludwigshafen am Rhein (DE)
- Teles, Joaquim Henrique
67056 Ludwigshafen am Rhein (DE)
- Mormul, Jaroslaw Michael
67056 Ludwigshafen am Rhein (DE)
- Wurm, Thomas Maximilian
67056 Ludwigshafen am Rhein (DE)

(74) Representative: Altmann Stößel Dick Patentanwälte PartG mbB
Isartorplatz 1
80331 München (DE)

Remarks:
This application was filed on 17-10-2025 as a divisional application to the application mentioned under INID code 62.

# (54) ZEOLITIC MATERIAL HAVING A FRAMEWORK STRUCTURE COMPRISING SI, O, AND TI

(57) The present invention relates to a zeolitic material of MFI framework type having a framework structure comprising Si, O, and Ti, obtained or obtainable from a Ti containing compound, wherein the Ti containing compound has an APHA color number of ≤ 300, the APHA color number being determined according to DIN EN ISO 6271:2016-05; wherein the Ti containing compound comprises a Ti containing alcoholate selected from the group of $Ti(O\text{-}alkyl)_4$, wherein each alkyl group is independently selected from branched or unbranched C1 to C6 alkyl. The present invention also relates to a process for preparation of said zeolitic material, a molding comprising said zeolitic material, the use of said molding and a process for oxidizing an organic compound comprising bringing an organic compound in contact with a catalyst comprising a molding..

EP 4 714 541 A2

## Description

The present invention relates to a zeolitic material of MFI framework type having a framework structure comprising Si, O, and Ti, obtained or obtainable from a Ti containing compound, wherein the Ti containing compound has an APHA color number of ≤ 300, the APHA color number being determined according to DIN EN ISO 6271:2016-05; wherein the Ti containing compound comprises a Ti containing alcoholate selected from the group of $Ti(O\text{-alkyl})_4$, wherein each alkyl group is independently selected from branched or unbranched C1 to C6 alkyl. The present invention also relates to a process for preparation of said zeolitic material, a molding comprising said zeolitic material, the use of said molding and a process for oxidizing an organic compound comprising bringing an organic compound in contact with a catalyst comprising a molding.

Propylene oxide is an important intermediate in the chemical industry. A suitable process for the preparation of propylene oxide starts from propylene and makes use of hydrogen peroxide ($H_2O_2$) as oxidizing agent, of a solvent and of an epoxidation catalyst comprising a titanium zeolite. Titanium zeolites useful for this purpose include titanium silicate-1 (TS-1), which is a titanosilicate zeolite with a MFI framework structure. TS-1 has been paid much attention because it enables clean oxidative reactions under comparably mild conditions. TS-1 is usually hydrothermally synthesized, using a Ti containing alcoholate (alkoxide) precursor in order to get a controlled incorporation of Ti into the zeolite framework. As Ti precursor of choice, compound such as tetraethyl orthotitanate ($Ti(OEt)_4$), tetraisopropyl orthotitanate ($Ti(OPr)_4$), or tetra-n-butyl orthotitanate $Ti(OBu)_4$ are often used. It is known that TS-1 obtained by common preparation methods contains not all the Ti as framework element but rather portions of the Ti are present as extra-framework Ti, such as for example in the form of titanium dioxide (anatas form), due to the strong polymerization tendency under aqueous conditions.

US 2013/296159 A1 describes a process for preparing a zeolitic material, wherein, inter alia, tetraethylorthotitanate (TEOTi, $Ti(OEt)_4$) is used as titanium source, EP 0 712 852 A1 is directed to a method for epoxidizing an olefin using a TS-1 catalyst.

D.-G. Huang et al. (Deng-Gao Huang, Xian Zhang, Bao-Hui Chen, Zi-Sheng Chao, Catalysis Today, 158 (2010), pages 510-514) describe the synthesis of TS-1 via three different procedures using tetraethylorthosilicate and tetrabutyl orthotitanate as Si and Ti sources and tetrapropylammonium hydroxide as template. A positive influence of alcohols such as ethanol on the synthesis is described, wherein a slow hydrolysis of the Ti containing species is indicated as well as a reduced formation of titanium dioxide (anatas form). Indian published patent application IN 189381 A discloses that ketones would be of use for stabilizing the Ti containing species and would be useful in preventing anatas formation. That is, the state of the art appears to indicate that the presence of alcohols and ketones would be favorable in TS-1 synthesis.

Due to the importance of products such as propylene oxide in industry, it is desired to carry out the epoxidation reaction of propylene as efficiently as possible, including an optimization of the catalysts used as far as possible.

Therefore, it was an object of the present invention to provide a zeolitic material having a framework structure comprising Si, O, and Ti, which is economically advantageous as catalyst in processes for the preparation of propylene oxide.

Ti containing compound such as $Ti(OEt)_4$ are normally described as colorless liquids but these compounds tend to develop color over time. Now, it has been surprisingly found that the color of the Ti containing compound is essential for the performance of the final zeolitic material having a framework structure comprising Si, O, and Ti produced therefrom.

### 1$^{st}$ aspect - zeolitic material having a framework structure comprising Si, O, and Ti

Therefore, the invention relates in a first aspect to zeolitic material having a framework structure comprising Si, O, and Ti, obtained or obtainable from a Ti containing compound, wherein the Ti containing compound has an APHA color number of ≤ 300.

The APHA color number in the context of the present invention is determined according to DIN EN ISO 6271:2016-05. An APHA color number of the Ti containing compound of ≤ 300 means preferably an APHA color number in the range of from 0 (zero) to 300. More preferred, the APHA color number is ≤ 290 (in the range of from 0 to 290), more preferred the APHA color number is ≤ 280 (in the range of from 0 to 280), more preferred the APHA color number is ≤ 270 (in the range of from 0 to 270), more preferred the APHA color number is ≤ 260 (in the range of from 0 to 260), more preferred the APHA color number is ≤ 251 (in the range of from 0 to 251) more preferred the APHA color number is ≤ 250 (in the range of from 0 to 250), more preferred the APHA color number is ≤ 200 (in the range of from 0 to 200), more preferred the APHA color number is ≤ 150 (in the range of from 0 to 150), more preferred the APHA color number is ≤ 105 (in the range of from 0 to 105).

It was surprisingly found that when the zeolitic material having a framework structure comprising Si, O, and Ti, obtained or obtainable from a Ti containing compound, wherein the Ti containing compound has an APHA color number of ≤ 300, is used as catalyst in a, preferably continuous, epoxidation of a C2 to C5 alkylene with hydrogen peroxide, the catalytic performance, especially the selectivity, decreases with increasing APHA number of the Ti containing compound that was used for the synthesis of the zeolitic material. At an APHA number above 300 a much higher temperature in the

epoxidation zone (and thus a higher temperature of the cooling medium) is required in order to keep the hydrogen peroxide conversion at a value comparable to the value, which is achieved when a Ti containing compound was used for the synthesis of the zeolitic material with an APHA number ≤ 300. However, when these zeolitic materials based on Ti containing compounds with such high APHA numbers are used as catalysts, even with higher temperatures, the selectivity is poor, i.e. < 85 %. For example, in the epoxidation of propylene with hydrogen peroxide, the selectivity for propylene oxide relative to hydrogen peroxide ($S(H_2O_2)$ to PO) can be remarkably improved. Even if the results of different catalysts appeared comparable during an initial runtime, it could be seen that at longer runtimes such as > 150 h, preferably > 200 h, more preferred > 250 h, catalysts based on Ti containing compounds having an APHA color number of ≤ 300 give remarkably higher selectivity of ≥85 % (range of from 85 to 95%). Catalysts based on Ti containing compounds having an APHA color number of > 300 result in selectivity of < 85 % at longer runtimes.

The zeolitic material having a framework structure comprising Si, O, and Ti is obtained or obtainable from a Ti containing compound as mentioned above. Preferably, the Ti containing compound comprises a Ti containing alcoholate (alkoxide), preferably selected from the group of $Ti(O\text{-}alkyl)_4$, wherein each alkyl group is independently selected from branched or unbranched C1 to C6 alkyl; more preferably from the group consisting of tetraethyl orthotitanate ($Ti(OEt)_4$), tetraisopropyl orthotitanate ($Ti(OPr)_4$), tetra-n-butyl orthotitanate $Ti(OBu)_4$ and mixtures of two or more of these compounds; more preferably from the group of tetraethyl orthotitanate ($Ti(OEt)_4$), tetraisopropyl orthotitanate ($Ti(OPr)_4$) and mixtures of $Ti(OEt)_4$ and $Ti(OPr)_4$.

Preferably, the Ti containing compound, from which the zeolitic material having a framework structure comprising Si, O, and Ti is obtained or obtainable, comprises at least 90 weight-%, preferably at least 95 weight-%, more preferably at least 96 weight-%, more preferably at least 97 weight-%, more preferably at least 98 weight-%, more preferably at least 99 weight-% of the Ti containing alcoholate based on the overall weight of the Ti containing compound. "At least 90 weight-%" means a value in the range of from 90 to 100 weight-%; the same applies for the other values mentioned above.

Preferably, the Ti containing compound, from which the zeolitic material having a framework structure comprising Si, O, and Ti is obtained or obtainable, comprises ≤ 10 weight-%, more preferably ≤ 5 weight-%, more preferably ≤ 4 weight-%, more preferably ≤ 3 weight-%, more preferably ≤ 2 weight-%, more preferably ≤ 1 weight-%, based on the overall weight of the Ti containing compound, of a substance of formula (I)

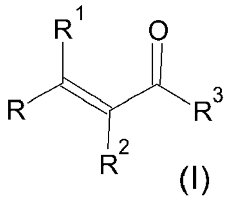

(I)

wherein R, $R^1$and $R^2$ are independently selected from the group consisting of hydrogen atom and branched or unbranched C1 to C6 alkyl, and $R^3$ is selected from the group consisting of hydrogen atom, branched or unbranched C1 to C6 alkyl, and branched or unbranched C1 to C6 alkenyl. "≤ 10 weight-%" means a value in the range of from 0 (zero) to 10 weight-%; the same applies for the other values mentioned above.

The substance of formula (I) may be present in monomeric form as shown in formula (I) or may be present in oligomeric form with 2 to 7 repeating units. These oligomers are present only in amounts of < 100 ppm, preferably < 50 ppm, more preferred < 10 ppm, based on the overall weight of the Ti containing compound. In addition to one or more of the substances of formula (I), the Ti containing compound may comprise isophorone based substances of formula (II)

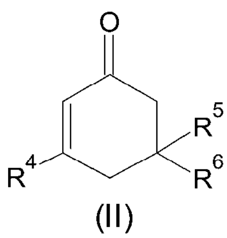

(II)

wherein $R^4$, $R^5$, and $R^6$ are independently selected from hydrogen atom and branched or unbranched C1 to C6 alkyl. The substance of formula (I) is preferably selected from the group of $CH_3\text{-}CH=CH\text{-}C(=O)\text{-}CH=CH\text{-}CH_3$ (hepta-2,5-dien-4-on), $(CH_3)_2C=CH\text{-}C(=O)\text{-}CH=C(CH_3)_2$ (phorone, 2,6-dimethyl-hepta-2,5-dien-4-on) and mixtures of hepta-2,5-dien-4-on and 2,6-dimethyl-hepta-2,5-dien-4-on. In embodiments where the Ti containing compound comprises $Ti(OEt)_4$, the substance of formula (I) comprises at least $CH_3\text{-}CH=CH\text{-}C(=O)\text{-}CH=CH\text{-}CH_3$ (hepta-2,5-dien-4-on). In embodiments where the Ti containing compound comprises $Ti(OPr)_4$, the substance of formula (I) comprises at least $(CH_3)_2C=CH\text{-}$

$C(=O)-CH=C(CH_3)_2$ (2,6-dimethyl-hepta-2,5-dien-4-on).

As mentioned above, it was surprisingly found that when the zeolitic material is used as catalyst in, preferably continuous, epoxidation of a C2 to C5 alkylene with hydrogen peroxide, the catalytic performance, especially the selectivity, decreases with increasing APHA number of the Ti containing compound that was used for the synthesis of the zeolitic material. Thus, it can be concluded that a coloring of the Ti containing compound comprising the Ti containing alcoholate (an APHA color number of ≤ 300, determined according to DIN EN ISO 6271:2016-05), should be avoided in the synthesis of the zeolitic material. Without being bound to this theory, it is assumed that a residual amount of water in the Ti containing compound comprising the Ti containing alcoholate results in the destruction of the alcoholate and in formation of $TiO_2$. Said $TiO_2$, which can be determined in the final zeolitic material, appears to act as a photo sensitizer and catalyzes the oxidation of the remaining alcoholate, for example, the isopropanolate or ethanolate to the respective carbonyl (C=O) containing compound (aldehyde or ketone). The carbonyl containing compound, for example, acetaldehyde or acetone, undergoes an aldol condensation under strong basic conditions, wherein the resulting aldol condensation products correspond to formula (I). These aldol condensation products contribute to the color and interfere in the synthesis of the zeolitic material having a framework structure comprising Si, O, and Ti.

The zeolitic material having a framework structure comprising Si, O, and Ti, obtained or obtainable from a Ti containing compound as described above, has preferably a titanium dioxide content of ≤ 1.5 weight-%, preferably ≤ 1.2 weight-%, more preferably ≤ 1 weight-%, more preferably ≤ 0.5 weight-%, based on the overall weight of the zeolitic material, wherein preferably at least 98 weight-% of the titanium dioxide are of anatas form, determined according to Reference Example 7.

The zeolitic material having a framework structure comprising Si, O, and Ti, obtained or obtainable from a Ti containing compound as described above, has preferably a crystallinity, determined in accordance with Reference Example 7, of more than 85 weight-%, preferably in the range of from 85 to 95 weight-%, more preferably in the range of from 87 to 93 weight-%, based on the total weight of the zeolitic material. The zeolitic material having a framework structure comprising Si, O, and Ti, obtained or obtainable from a Ti containing compound as described above, exhibits preferably a propylene oxide activity of at least 8.5 weight-%, more preferably in the range of from 8.5 to 9.5 weight-%, more preferably in the range of from 8.5 to 9.0 weight-%, determined as described in Reference Example 1. Preferably, the zeolitic material exhibits a BET specific surface area in the range of from 440 to 580 $m^2/g$, preferably in the range of from 450 to 570 $m^2/g$, determined as described in Reference Example 4.

Preferably, 95 to 100 weight-%, preferably from 98 to 100 weight-%, more preferably from 99 to 100 weight-%, more preferably from 99.5 to 100 weight-%, more preferably from 99.9 to 100 weight-% of the zeolitic material, obtained or obtainable from a Ti containing compound as described above, consist of Si, O, Ti and optionally H. Preferably, the zeolitic material comprises Ti in an amount in the range from 0.2 to 5 weight-%, more preferably in the range from 0.5 to 4 weight-%, more preferably in the range from 1.0 to 3 weight-%, more preferably in the range from 1.2 to 2.5 weight-%, more preferably in the range from 1.4 to 2.2 weight-%, calculated as elemental Ti and based on the total weight of the zeolitic material.

Preferably, the zeolitic material having a framework structure comprising Si, O, and Ti, obtained or obtainable from a Ti containing compound as described above, is a titanium zeolite having ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AWO, AWW, BCT, BEA, BEC, BIK, BOG, BPH, BRE, CAN, CAS, CDO, CFI, CGF, CGS, CHA, CHI, CLO, CON, CZP, DAC, DDR, DFO, DFT, DOH, DON, EAB, EDI, EMT, EPI, ERI, ESV, ETR, EUO, FAU, FER, FRA, GIS, GIU, GME, GON, GOO, HEU, IFR, ISV, ITE, ITH, ITQ,ITW, IWR, IWW, JBW, KFI, LAU, LEV, LIO, LOS, LOV, LTA, LTL, LTN, MAR, MAZ, MCM-22(S), MCM-36, MCM-56, MEI, MEL, MEP, MER, MIT-1, MMFI, MFS, MON, MOR, MSE, MSO, MTF, MTN, MTT, MTW, MWW, NAB, NAT, NEES, NON, NPO, OBW, OFF, OSI, OSO, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN SFO, SGT, SOD, SSY, STF, STI, STT, TER, THO, TON, TSC, UEI, UFI, UOZ, USI, UTL, VET, VFI, VNI, VSV, WEI, WEN, YUG, ZON SVR, SVY framework structure or a mixed structure of two or more of these framework types; more preferably the zeolitic material having a framework structure comprising Si, O, and Ti is a titanium zeolite having an MFI framework type, an MEL framework type, an MWW framework type, an MCM-22(S) framework type, an MCM-56 framework type, an IEZ-MWW framework type, an MCM-36 framework type, an ITQ framework type, a BEA framework type, a MOR framework type, or a mixed structure of two or more of these framework types; more preferably an MFI framework type, or an MWW framework type; more preferred the zeolitic material having a framework structure comprising Si, O, and Ti has framework type MFI; more preferably the zeolitic material having a framework structure comprising Si, O, and Ti is a titanium silicalite-1 (TS-1). Framework types such as MCM-22(S), MCM-56, IEZ-MWW, ITQ (delaminated MWW), MIT-1, and MCM-36 are titanium zeolites having framework structures related to MWW framework structure, obtained or obtainable therefrom or from the respective two dimensional precursor by, for example, layer expansion and/or postmodification.

No restrictions exist how the zeolitic material having a framework structure comprising Si, O, and Ti is prepared from the Ti containing compound provided that finally a zeolitic material is achieved. Suitable process for such a synthesis are known to a person skilled in the art, including commonly known hydrothermal synthesis methods.

In some embodiments, the zeolitic material having a framework structure comprising Si, O, and Ti is prepared

from one or more sources of Si, one or more Ti containing compound(s), and one or more structure directing agent(s). These compounds are mixed in the presence of water in a suitable manner so that an aqueous mixture is obtained, which is then crystallized at elevated temperature and at elevated pressure.

Si source

It is preferred that the one or more sources of Si comprises one or more compounds selected from the group consisting of silicas, silicates, and mixtures thereof; preferably from the group consisting of fumed silica, silica hydrosols, reactive amorphous solid silicas, silica gel, silicic acid, water glass, sodium metasilicate hydrate, sesquisilicate, disilicate, colloidal silica, pyrogenic silica, silicic acid esters, tetraalkoxysilanes, and mixtures of two or more thereof; more preferably from the group consisting of silica hydrosols, silica gel, silicic acid, water glass, sodium metasilicate hydrate, colloidal silica, silicic acid esters, tetraalkoxysilanes, and mixtures of two or more thereof; more preferably from the group consisting of silica hydrosols, silicic acid, colloidal silica, silicic acid esters, tetraalkoxysilanes, and mixtures of two or more thereof; wherein more preferably the one or more sources of Si comprise one or more tetraalkoxysilanes selected from the group consisting of ($C_1$-$C_6$)tetraalkoxysilanes and mixtures of two or more thereof; preferably ($C_1$-$C_5$)tetraalkoxysilanes and mixtures of two or more thereof; more preferably ($C_1$-$C_4$)tetraalkoxysilanes and mixtures of two or more thereof; more preferably ($C_1$-$C_3$)tetraalkoxysilanes and mixtures of two or more thereof; wherein more preferably the one or more sources of Si comprise tetramethoxysilane and/or tetraethoxysilane, preferably tetraethoxysilane; and wherein more preferably the one or more sources of Si is tetramethoxysilane and/or tetraethoxysilane, preferably tetraethoxysilane (tetraethyl orthosilicate).

structure directing agent

It is preferred that the one or more structure directing agent(s) comprise one or more compound(s) selected from the group consisting of amine, quaternary ammonium compound, alcohol and mixtures of two or more of these agents. Preferably, the one or more structure directing agent(s) is/are selected from tetraalkylammonium cation $R^1R^2R^3R^4N^+$-containing compounds, wherein $R^1$, $R^2$, $R^3$, and $R^4$ each independently represent a C1 to C10 alkyl group. It is preferred that $R^1$, $R^2$, $R^3$, and $R^4$ independently from one another represent an, optionally branched, C1-C6 alkyl group, preferably C1-C5 alkyl group, more preferably C2-C4 alkyl group, and more preferably an, optionally branched, C2-C3 alkyl group, wherein more preferably $R^1$, $R^2$, $R^3$, and $R^4$ independently from one another represent ethyl or propyl, wherein more preferably all of $R^1$, $R^2$, $R^3$, and $R^4$ represent propyl, preferably n-propyl.

It is preferred that independently of one another the one or more tetraalkylammonium cation $R^1R^2R^3R^4N^+$-containing compounds are salts, more preferably one or more salts selected from the group consisting of halides, preferably chloride and/or bromide, more preferably chloride, hydroxide, sulfate, nitrate, phosphate, acetate, and mixtures of two or more thereof, more preferably from the group consisting of chloride, hydroxide, sulfate, and mixtures of two or more thereof, wherein more preferably the one or more tetraalkylammonium cation $R^1R^2R^3R^4N^+$-containing compounds are tetraalkylammonium hydroxides and/or chlorides, and more preferably tetraalkylammonium hydroxides. The one or more structure directing agent(s) is/are preferably used in the form of an aqueous solution.

Regarding details on the one or more Ti containing compound(s), reference is made to the 2nd aspect as described herein below. As described herein below in more detail, the one or more Ti containing compound(s) is/are Ti containing compound(s) having an APHA color number of $\leq$ 300.

In some embodiments, the zeolitic material having a framework structure comprising Si, O, and Ti is prepared said process comprising:

a) preparing a mixture comprising one or more sources of Si, one or more Ti containing compound(s), and one or more structure directing agent(s), and water;

b) feeding the mixture prepared in (a) into a reactor; and

c) crystallizing the zeolitic material having a framework structure comprising Si, O, and Ti, from the mixture in the reactor, wherein the mixture is heated to a temperature in the range of from 70 to 300°C.

No restrictions exist how and in which order the one or more sources of Si, one or more Ti containing compound(s), the one or more structure directing agent(s), and water are mixed.

In some embodiments, the one or more Ti containing compound(s) and the one or more structure directing agent(s), preferably in aqueous solution, are pre-mixed before step a), preferably in a closed vessel, followed by removal of alcohol formed by distillation, obtaining an aqueous solution comprising a reaction product of the one or more Ti containing compound(s) and the one or more structure directing agent(s). For example, if tetraethylorthotitanate ($Ti(OEt)_4$) is used as Ti containing compound and an aqueous solution of tetrapropyl ammonium hydroxide is used as the structure directing agent, the reaction product is an aqueous solution of Ti-tetrapropyl ammonium hydroxide.

In cases where a pre-mixing is done, the zeolitic material having a framework structure comprising Si, O, and Ti is prepared by a process comprising

a') preparing a mixture comprising one or more sources of Si, the reaction product from pre-mixing the one or more Ti containing compound(s) and the one or more structure directing agent(s), and water;
b) feeding the mixture prepared in (a') into a reactor; and
c) crystallizing the zeolitic material having a framework structure comprising Si, O, and Ti, from the mixture in the reactor, wherein the mixture is heated to a temperature in the range of from 70 to 300°C.

Preferably, the reactor of b) and c) is pressure-resistant, for example, an autoclave.

The process is carried out batch wise (batch mode) or continuously (continuous mode). Preferably, regarding continuous mode, it is preferred that at least one of steps a), b) and c), respectively at least one of steps a'), b and c) is done continuously. More preferred regarding continuous mode, all steps a), b) and c) and a'), b) and c) respectively are done continuously. For a continuous process, it is preferred that a continuous flow reactor is used as reactor of b) and c).

The $H_2O$ : Si molar ratio of water to the one or more sources of Si calculated as $SiO_2$ in the mixture prepared in (a) and (a') respectively is preferably in the range of from 100 : 1 to 10 : 1. It is preferred that the Si : Ti molar ratio of the one or more sources of Si, calculated as $SiO_2$, to the one or more Ti containing compound(s), calculated as $TiO_2$, of the mixture prepared in (a) and (a') respectively is in the range of from 1 : 100 to 100: 1, more preferably from 1 : 50 to 50 : 1, more preferably from 10: 1 to 50 : 1. The molar ratio of the one or more structure directing agent(s) : the one or more Ti containing compound(s), calculated as $TiO_2$ of the mixture prepared in (a) and (a') respectively is preferably in the range of from 5 : 1 to 100 . 1, more preferably from 10 : 1 to 50 : 1, more preferably 20 : 1 to 40 : 1.

It is preferred that step c) is carried out at a temperature in the range of from 90 to 280 °C, more preferably of from 110 to 250 °C, more preferably of from 130 to 220 °C, more preferably of from 150 to 200 °C, more preferably of from 160 to 190 °C, and more preferably of from 170 to 180 °C. It is further preferred that c) is carried out under autogenous pressure, wherein preferably the pressure is in the range of from 0.5 to 15 MPa, more preferably in the range of from 1 to 12 MPa, more preferably from 1.5 to 11 MPa, more preferably from 2 to 10 MPa. The unit bar here and in the following means bar(abs) and refers to an absolute pressure of $10^5$ Pa (1 bar = $10^5$ Pa).

It is preferred that prior to b), the mixture prepared in a) is aged at a temperature in the range of from 15 to 120°C, more preferably from 20 to 115°C, more preferably from 22 to 100°C. It is preferred that the aging is done for a time period in the range of from 0.05 to 48 h, more preferably from 0.15 to 24 h, more preferably from 0.25 to 12 h, more preferably from 0.5 to 6 h, more preferably from 0.75 to 3 h, more preferably from 1 to 2 h. Alcohol formed during said aging is preferably removed by distillation, at least partially.

The process may comprise further process steps. It is preferred that the process further comprises

d) treating the reaction product effluent exiting the reactor in c) with
a liquid comprising one or more solvents and/or via expansion of the reaction product effluent;
and/or, preferably and,
e) isolating the zeolitic material obtained in c) or d);
f) optionally washing the zeolitic material obtained in c), d) or f);
g) drying the zeolitic material obtained in c), d), e), or f);
and/or, preferably and,
h) calcining the zeolitic material obtained in c, d), e), f), or g).

In the case where the process comprises g), it is preferred that drying in g) is effected at a temperature in the range from 50 to 220 °C, preferably from 70 to 190 °C, more preferably from 80 to 170 °C, more preferably from 90 to 150 °C, more preferably from 100 to 140 °C, and more preferably from 110 to 130 °C, preferably for a time in the range of from 1 to 10 hours, more preferably from 2 to 8 hours, more preferably from 3 to 6 hours.

In the case where the process comprises h), it is preferred that calcining in h) is effected at a temperature in the range from 300 to 700 °C, more preferably from 375 to 625 °C, more preferably from 425 to 575 °C, more preferably from 470 to 550 °C., Regarding duration of calcination, no restrictions exist as long as the final calcined material obtained from h) has a suitable three dimensional zeolitic structure, which a person skilled in the art can easily determine, for example, by measurement and analysis of X-ray diffraction (XRD) data. For example, in case of a batch wise process, calcination is done preferably for a time in the range of from 1 to 10 hours, more preferably from 2 to 8 hours, more preferably from 3 to 6 hours.

2nd aspect - Ti containing compound having an APHA color number of ≤ 300

In a second aspect, the invention relates to a Ti containing compound having an APHA color number of ≤ 300.

Preferably, the Ti containing compound comprises a Ti containing alcoholate, preferably selected from the group of Ti(O-alkyl)$_4$, wherein each alkyl group is independently selected from branched or unbranched C1 to C6 alkyl, more preferably from the group consisting of tetraethyl orthotitanate ($Ti(OEt)_4$), tetraisopropyl orthotitanate ($Ti(OPr)_4$), tetra-n-butyl orthotitanate $Ti(OBu)_4$ and mixtures of two or more of these compounds, more preferably from the group of tetraethyl orthotitanate ($Ti(OEt)_4$), tetraisopropyl orthotitanate ($Ti(OPr)_4$) and mixtures of $Ti(OEt)_4$ and $Ti(OPr)_4$.

Preferably, the Ti containing compound having an APHA color number of ≤ 300 comprises at least 90 weight-%, preferably at least 95 weight-%, more preferably at least 96 weight-%, more preferably at least 97 weight-%, more preferably at least 98 weight-%, more preferably at least 99 weight-% of the Ti containing alcoholate based on the overall weight of the Ti containing compound. The Ti containing compound comprises preferably ≤ 10 weight-%, more preferably ≤ 5 weight-%, more preferably ≤ 4 weight-%, more preferably ≤ 3 weight-%, more preferably ≤ 2 weight-%, more preferably ≤ 1 weight-%, based on the overall weight of the Ti containing compound, of a substance of formula (I),

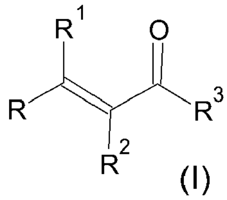

(I)

wherein R, $R^1$ and $R^2$ are independently selected from the group consisting of hydrogen atom and branched or unbranched C1 to C6 alkyl, and $R^3$ is selected from the group consisting of hydrogen atom, branched or unbranched C1 to C6 alkyl, and branched or unbranched C1 to C6 alkenyl. The substance of formula (I) is preferably selected from the group of $CH_3$-CH=CH-C(=O)-CH=CH-$CH_3$ (hepta-2,5-dien-4-on), $(CH_3)_2C$=CH-C(=O)-CH=$C(CH_3)_2$ (phorone= 2,6-dimethyl-hepta-2,5-dien-4-on) and mixtures of hepta-2,5-dien-4-on and 2,6-dimethyl-hepta-2,5-dien-4-on.

3rd aspect - Use of a Ti containing compound

In a third aspect, the invention relates to the use of a Ti containing compound having an APHA color number of ≤ 300 as described above with respect to the 2nd aspect for the preparation of a zeolitic material having framework structure comprising Si, O, and Ti according to the 1st aspect described above. Consequently, the invention also relates to a process for preparation of a zeolitic material having a framework structure comprising Si, O, and Ti, wherein the zeolitic material having a framework structure comprising Si, O, and Ti, is prepared from a Ti containing compound having an APHA color number of ≤ 300, wherein said Ti containing compound is as described with respect to the 2nd aspect above.

4th aspect - Molding

The invention further relates in a 4th aspect to a molding comprising a zeolitic material having a framework structure comprising Si, O, and Ti according to the 1st aspect as described above.

Preferably, the molding exhibits a tortuosity parameter relative to water <4, more preferably in the range of from 1.0 to 2.5, more preferably in the range of from 1.3 to 2.0, more preferably in the range of from 1.40 to 1.80, more preferably in the range of from 1.50 to 1.75, more preferably in the range of from 1.55 to 1.70, determined as described in Reference Example 5. The pore volume of the molding determined according to DIN 66133:1993-06 preferably ranges from 0.1 to 1.5 ml/g.

Further according to the 4th aspect, the invention also relates to the use of the molding a as an adsorbent, an absorbent, a catalyst or a catalyst component, preferably as a catalyst or as a catalyst component, more preferably as a Lewis acid catalyst or a Lewis acid catalyst component, as an isomerization catalyst or as an isomerization catalyst component, as an oxidation catalyst or as an oxidation catalyst component, as an aldol condensation catalyst or as an aldol condensation catalyst component, or as a Prins reaction catalyst or as a Prins reaction catalyst component.

Regarding said use as an oxidation catalyst or as an oxidation catalyst component, the molding is preferably used as an epoxidation catalyst or as an epoxidation catalyst component, more preferably as an epoxidation catalyst. Preferably, the molding is used in the epoxidation reaction of an organic compound having at least one C-C double bond, preferably a C2-C10 alkene, more preferably a C2-C5 alkene, more preferably a C2-C4 alkene, more preferably a C2 or C3 alkene, more preferably propene, more preferably for the epoxidation of propene with hydrogen peroxide as oxidizing agent, more preferably for the epoxidation of propene with hydrogen peroxide as oxidizing agent in a solvent comprising an alcohol, preferably methanol.

5th aspect - Process for oxidizing an organic compound

In a 5th aspect, the invention relates to a process for oxidizing an organic compound comprising bringing an organic compound in contact, preferably in continuous mode, with a catalyst comprising a molding according to the 4th aspect, preferably for epoxidizing an organic compound, more preferably for epoxidizing an organic compound having at least one C-C double bond, preferably a C2-C10 alkene, more preferably a C2-C5 alkene, more preferably a C2-C4 alkene, more preferably a C2 or C3 alkene, more preferably propene. Hydrogen peroxide is preferably used as oxidizing agent, wherein the (ep)oxidation reaction is preferably carried out in a solvent, more preferably in a solvent comprising an alcohol, preferably methanol. More preferred, the (ep)oxidation reaction is carried out in a solvent mixture comprising a solvent and water, more preferably in a solvent mixture comprising an alcohol, preferably methanol, and water.

Also, according to the 5th aspect, the invention relates to a process for preparing propylene oxide comprising reacting propene, preferably in continuous mode, with hydrogen peroxide in a solvent in the presence of a catalyst comprising a molding according to the 4th aspect to obtain propylene oxide. Reacting propene with hydrogen peroxide in a solvent in the presence of a catalyst is preferably carried out in an epoxidation zone at an absolute pressure in the epoxidation zone in the range from 0.5 to 5.0 MPa, preferably in the range from 1.5 to 3.0 MPa, more preferably in the range from 1.8 to 2.8 MPa.

Preferably, reacting propene with hydrogen peroxide in a solvent in the presence of a catalyst is carried out in an epoxidation zone at a temperature in the epoxidation zone in the range from 33 to 73 °C, preferably in the range from 38 to 63 °C, more preferably in the range from 53 to 63 °C. The temperature in the epoxidation zone is measured with a tenfold thermocouple, i.e. ten thermoelements. The epoxidation zone is defined as the zone where a reaction of hydrogen peroxide and propylene resulting in propylene oxide formation still takes place in a detectable amount (≥ 10 ppm propylene oxide). Preferably, the epoxidation zone is present over the complete length of the catalyst bed, i.e. is the zone, preferably within a reactor, where the epoxidation catalyst is present (epoxidation zone = catalyst bed). The hotspot, i.e. the zone where maximum reaction takes place, is typically located in the first half of the catalyst bed and preferably ≥ six of the ten thermoelements are located in the first half of the catalyst bed.

The temperature in epoxidation zone is the average temperature determined from the temperature values measured by all thermoelements located in the first half of the catalyst bed. Typically, the temperature values measured by these thermoelements differ from each other in the range of from 6 to 10°C.

Preferably, a cooling medium is used for adjusting the temperature in the epoxidation zone, wherein the temperature of the cooling medium is preferably in the range from 25 to 65 °C, preferably in the range from 30 to 55 °C, more preferably in the range from 345 to 55 °C. The temperature of the cooling medium is preferably the temperature of the cooling medium at entrance into the reactor. A temperature of the cooling medium in the range from 45 to 55 °C is the optimum temperature range. Temperatures below 45 °C are related to the start-up stage of the epoxidation reaction and are too low for an efficient tempering during the epoxidation reaction. Above 55 °C the decomposition of hydrogen peroxide and the formation of oxygen increase exponentially. In the range from 45 to 55 °C of the cooling medium, the temperature in the epoxidation zone is in the optimum range of 53 to 63 °C so that a maximum in selectivity and an optimum in activity are reached.

In the process process for preparing propylene oxide, the weight ratio of propylene : hydrogen peroxide (w/w) is preferably in the range from 1:1 to 6:1, more preferably in the range from 1:1 to 2:1 or in the range from 4 :1 to 5:1. The weight ratio of solvent : hydrogen peroxide (w/w) is preferably in the range from 15:1 to 5:1, more preferably in the range from 12:1 to 6:1, more preferably in the range from 11:1 to 8:1. The weight ratio of solvent : propylene (w/w) in the reaction mixture is in the range from 10:1 to 1:0.1, preferably in the range from 9:1 to 1:1, more preferably in the range from 9:1 to 7:1 or in the range from 1.5:1 to 1:1.

The solvent is preferably an organic solvent, more preferably an organic epoxidation solvent, more preferred the organic solvent is selected from the group consisting of alcohol, acetonitrile, tert-butanol, propionitrile and mixtures of two or more thereof; more preferred selected from the group consisting of alcohol, acetonitrile and mixtures of alcohol and acetonitrile; more preferred the organic solvent comprises at least an alcohol. The "organic solvent comprises at least an alcohol", means that at least 90 weight-%, preferably at least 95 weight-%, more preferred at least 98 weight-%, more preferred at least 99 weight-% of the organic solvent consists of the alcohol, based on the overall weight of the organic solvent. The alcohol is preferably a C1 to C5 mono alcohol or a mixture of two or more C1 to C5 alcohols, more preferred the alcohol comprises at least methanol, more preferred the alcohol is methanol. According to a preferred embodiment, the organic solvent is methanol.

No restrictions exist regarding the water used for the solvent mixture. It is conceivable to use, for example, water which is treated with $NH_3$ but water not having been treated with $NH_3$ can also be used. Preferably deionized water is used for the reaction mixture. The deionized water can be obtained using ion-exchangers of using condensate. Typical grades of deionized water are defined in ISO 3696 of 1987 and all grades described there can be used within the scope of this invention. The water may additionally contain traces of corrosion inhibiting additives like ammonia, hydrazine or hydroxylamine in which case it should have a pH value in the range of 7 to 9 (measured with a calibrated glass electrode).

Preferably, the water used does not contain corrosion inhibiting additives.

Generally, a so called "reaction mixture" comprises propylene, water, organic solvent, and hydrogen peroxide and can be provided according to any conceivable method. Preferably, a reaction mixture comprising propylene, water, organic solvent, and hydrogen peroxide or a source of hydrogen peroxide, is prepared from two or more streams. More preferably, the reaction mixture is provided by combining at least three individual streams wherein a first stream comprises hydrogen peroxide or a source of hydrogen peroxide, optionally as aqueous solution, a second stream comprises propylene and optionally propane and a third stream comprises the organic solvent and optionally water.

Generally, it is conceivable to use a pure or essentially pure propylene as starting material and as part of the reaction mixture. Preferably, a mixture of propylene and propane is used. Most preferably a technical propylene grade according to an international norm like for instance ASTM D5273 or DIN 51622 is used. If a mixture of propylene and propane is used, the weight ratio of propylene : propane is preferably at least 7:3. For example, commercially available propylene can be employed which may be either a polymer grade propylene or a chemical grade propylene. Typically, polymer grade propylene has a propylene content in the range of from 99 to 99.8 weight-% and a propane content in the range of from 0.2 to 1 weight-%. Chemical grade propylene typically has a propylene content in the range of from 92 to 98 weight-% and a propane content in the range of from 2 to 8 weight-%. According to a preferred embodiment of the present invention, a mixture of propylene and propane is used which has a propylene content in the range of from 99 to 99.8 weight-% and a propane content in the range of from 0.2 to 1 weight-%.

Preferably, hydrogen peroxide is used in the form of an aqueous hydrogen peroxide solution. Said aqueous hydrogen peroxide solution has preferably a total organic carbon content (TOC) in the range from 100 to 800 mg per kg hydrogen peroxide comprised in the aqueous hydrogen peroxide solution, more preferably in the range from120 to 750 mg per kg hydrogen peroxide comprised in the aqueous hydrogen peroxide solution, more preferably in the range from 150 to 700 mg per kg hydrogen peroxide comprised in the aqueous hydrogen peroxide solution, determined according to DIN EN 1484.

Generally, no specific restrictions exist with respect to the pH value of the aqueous hydrogen peroxide solution and with respect to the amount of hydrogen peroxide contained in the solution provided that the epoxidation of propylene can be carried out efficiently. Preferably, the aqueous hydrogen peroxide solution has a pH in the range from 0 to 3.0, more preferably in the range from 0.1 to 2.5, more preferably in the range from 0.5 to 2.3, determined as described in Reference Example 4. Preferably, the aqueous hydrogen peroxide solution comprises from 20 to 80 weight-%, preferably from 30 to 70 weight-%, more preferably from 40 to 60 weight-% of hydrogen peroxide relative to the total weight of the aqueous hydrogen peroxide solution. Generally, no specific restrictions exist with respect to the origin of the aqueous hydrogen peroxide solution provided that the epoxidation of propylene can be carried out efficiently. Preferably, the aqueous hydrogen peroxide solution is obtained or obtainable from an anthraquinone process.

According to one embodiment of the present invention, it is preferred to employ an aqueous hydrogen peroxide solution, which is obtained as crude hydrogen peroxide solution by extraction of a mixture which results from a process known as anthraquinone process (see, e.g., Ullmann's Encyclopedia of Industrial Chemistry, 5th edition, volume A 13 (1989) pages 443-466), wherein a solution of an anthraquinone is used containing an alkyl group preferably having of from 2 to 10 carbon atoms, more preferably a 2-6 carbon atoms, more preferably 2, 5 or 6 carbon atoms, and where the solvent used usually consists of a mixture of at least two different solvents. Preferably, mixtures of two solvents or mixtures of three solvents are used. Preferably none of the solvents used in the anthraquinone process is a nitrogen containing substance. This solution of the anthraquinone is usually referred to as the working solution. In this process, the hydrogen peroxide formed in the course of the anthraquinone process is generally separated by extraction from the respective working solution after a hydrogenation/re-oxidation cycle. Said extraction can be performed preferably with essentially pure water, and the crude aqueous hydrogen peroxide solution is obtained. It is generally possible to further purify and/or concentrate the thus obtained crude aqueous hydrogen peroxide solution by distillation. It is possible to use crude aqueous hydrogen peroxide solution which has not been subjected to purification and/or concentration by distillation and it is also possible to use an aqueous hydrogen peroxide solution which has been subjected to purification and/or concentration by distillation. Further, it is generally possible to subject the crude aqueous hydrogen peroxide solution to a further extraction stage wherein a suitable extracting agent, preferably an organic solvent is used. More preferably, the organic solvent used for this further extraction stage is the same solvent which is used in the anthraquinone process. Preferably the extraction is performed using just one of the solvents in the working solution and most preferably using just the most nonpolar solvent of the working solution. In case the crude aqueous hydrogen peroxide solution is subjected to such further extraction stage, a so-called crude washed hydrogen peroxide solution is obtained. According to a preferred embodiment of the present invention, the crude washed hydrogen peroxide solution is used as the aqueous hydrogen peroxide solution. The production of a crude solution is described, for example, in European patent application EP 1 122 249 A1. As to the term "essentially pure water", reference is made to paragraph 10, page 3 of EP 1 122 249 A1 which is incorporated by reference. The hydrogen peroxide can also be treated to remove trace metals, for example, as described in the WO 2015/049327 A1 before use.

It is conceivable that the hydrogen peroxide is prepared in situ in the epoxidation zone from hydrogen and

oxygen, preferably in the presence of a suitable noble metal catalyst comprised in the epoxidation zone. A suitable noble metal catalyst preferably comprises one or more of palladium, platinum, silver, gold, rhodium, iridium, ruthenium and osmium. Preferably, the noble metal catalyst comprises palladium. The noble metal catalyst is preferably supported on a carrier, wherein the carrier preferably comprises one or more of $SiO_2$, $Al_2O_3$, $B_2O_3$, $GeO_2$, $Ga_2O_3$, $ZrO_2$, $TiO_2$, MgO, carbon and one or more zeolites, preferably one or more titanium zeolites. More preferably, the carrier comprises the epoxidation catalyst comprising a titanium zeolite. If hydrogen peroxide is prepared in the epoxidation zone according in situ from hydrogen and oxygen, the reaction mixture comprises propylene, hydrogen, oxygen, water, and organic solvent.

Reaction conditions in epoxidation

For epoxidation, a reaction mixture comprising propylene, hydrogen, oxygen, water, and organic solvent is contacted in an epoxidation zone with an epoxidation catalyst comprising a zeolitic material having a framework structure comprising Si, O, and Ti as described with respect to the 1st aspect of the invention or a molding according to the 4th aspect to a molding comprising a zeolitic material having a framework structure comprising Si, O, and Ti according to the 1st aspect as described above respectively and the reaction mixture is subjected to epoxidation reaction conditions in the epoxidation zone, obtaining, in the epoxidation zone, a mixture comprising propylene oxide, water, and organic solvent.

Generally, no specific restrictions exist regarding the conditions under which the contacting in the epoxidation zone with the epoxidation catalyst takes place provided that an efficient epoxidation of propylene takes place. Preferably, the epoxidation reaction conditions comprise trickle-bed conditions or fixed-bed conditions, wherein fixed-bed conditions are more preferred. Preferably, these conditions are applied in a reactor wherein the catalyst is present in a fixed-bed. "Trickle-bed conditions" preferably mean that the reaction is preferably carried out at temperatures and pressures at which the reaction mixture is present partly in a liquid phase and partly in a gaseous phase, with the catalyst being present in a fixed bed. In embodiments with fixed-bed conditions, the reaction is preferably carried out at temperatures and pressures at which the reaction mixture is liquid and no gas phase is present in the epoxidation zone, wherein two or more liquid phases may exist, with the catalyst being present in a fixed bed. Preferably, the contacting of the reaction mixture in the epoxidation zone with the epoxidation catalyst is carried out at an absolute pressure in the epoxidation zone in the range from 0.5 to 5.0 MPa, preferably in the range from 1.5 to 3.0 MPa, more preferably in the range from 1.8 to 2.8 MPa.

Generally, the contacting of the reaction mixture in the epoxidation zone with the epoxidation catalyst can be carried out in any appropriate way. Thus, for example, it can be carried out in a batch reactor or in at least one semi-continuously operated reactor or in at least one continuously operated reactor. The continuous mode of operation is preferred.

Preferably, the contacting of the reaction mixture in an epoxidation zone with an epoxidation catalyst is carried out in at least one, preferably continuously operated, reactor such as a tube reactor or a tube bundle reactor which preferably contains at least one cooling jacket surrounding the at least one tube. A cooling medium flows through the cooling jacket. The nature of the cooling medium is not particular restricted as long as it is sufficient for adjusting the temperature in the epoxidation zone. For example, the cooling medium comprises water, wherein it may additionally comprise additives such as aliphatic C2 to C5 mono-alcohols, aliphatic C2 to C5 di-alcohols and mixtures of two or more thereof. Preferably, $\geq 90$ weight-%, more preferred $\geq 95$ weight-% of the cooling medium are water, based on the total weight of the cooling medium. The temperature of the cooling medium is the temperature of the cooling medium used for adjusting the temperature of the reaction mixture in epoxidation zone wherein it is preferred that said temperature is adjusted by passing the cooling medium through a cooling jacket, wherein the temperature of the cooling medium is preferably the temperature of the cooling medium prior to adjusting the temperature of the reaction mixture, preferably the temperature of the cooling medium at the entrance of the cooling jacket.

Preferably, the contacting of the reaction mixture in the epoxidation zone with the epoxidation catalyst is carried out at a temperature in the epoxidation zone in the range from 33 to 73 °C, preferably in the range from 38 to 63 °C, more preferably in the range from 53 to 63 °C. The temperature in the epoxidation zone is measured with a tenfold thermocouple, i.e. ten thermoelements. The epoxidation zone is defined as the zone where a reaction of hydrogen peroxide and propylene resulting in propylene oxide formation still takes place in a detectable amount ($\geq 10$ ppm propylene oxide). Preferably, the epoxidation zone is present over the complete length of the catalyst bed, i.e. is the zone, preferably within a reactor, where the epoxidation catalyst is present (epoxidation zone = catalyst bed). The hotspot, i.e. the zone where maximum reaction takes place, is typically located in the first half of the catalyst bed and preferably $\geq$ six of the ten thermoelements are located in the first half of the catalyst bed. The temperature in epoxidation zone is the average temperature determined from the temperature values measured by all thermoelements located in the first half of the catalyst bed. Typically, the temperature values measured by these thermoelements differ from each other in the range of from 6 to 10°C. Preferably, the temperature of the cooling medium is the temperature of the cooling medium at entrance into the reactor. Preferably, the temperature of the cooling medium is in the range from 25 to 65 °C, more preferably in the range from 30 to 55 °C, more preferably in the range from 345 to 55 °C. A temperature of the cooling medium in the range from 45 to 55 °C is the optimum temperature range. Temperatures below 45 °C are related to the start-up stage of the

epoxidation reaction and are too low for an efficient tempering during the epoxidation reaction. Above 55 °C the decomposition of hydrogen peroxide and the formation of oxygen increase exponentially. In the range from 45 to 55 °C of the cooling medium, the temperature in the epoxidation zone is in the optimum range of 53 to 63 °C so that a maximum in selectivity and an optimum in activity are reached.

Epoxidation zone

The reaction mixture is contacted in an epoxidation zone with an epoxidation catalyst comprising a zeolitic material having a framework structure comprising Si, O, and Ti according to the 1st aspect of the invention or a molding according to the 4th aspect to a molding comprising a zeolitic material having a framework structure comprising Si, O, and Ti according to the 1st aspect as described above respectively, and the reaction mixture is subjected to epoxidation reaction conditions in the epoxidation zone, obtaining, in the epoxidation zone, a mixture comprising propylene oxide, water, and organic solvent.

Generally, there are no specific restrictions regarding the design of the epoxidation zone provided that it is suitable for carrying out a, preferably continuous, epoxidation reaction. Preferably, the epoxidation zone comprises one or more epoxidation subzone wherein a given epoxidation subzone preferably consist of one or more epoxidation reactors wherein, with regard to the design of the one or more epoxidation reactors, no specific restrictions exist provided that the reactors are suitable for carrying out a, preferably continuous, epoxidation reaction.

Preferably, the epoxidation zone comprises a first epoxidation subzone consisting of one or more epoxidation reactors A. The term "first epoxidation subzone" as used in this context of the present invention relates to the epoxidation subzone into which the reaction mixture is passed, wherein the epoxidation zone may comprise further epoxidation subzones which are arranged downstream of the first epoxidation subzone. If the first epoxidation subzone consisting of two or more epoxidation reactors A, it is preferred that the two or more epoxidation reactors A are arranged in parallel. In this case, it is preferred that the reaction mixture is passed into at least one of the epoxidation reactors A. It is possible, for example, that, while the reaction mixture is passed into at least one of the epoxidation reactors A, at least one of the reactors A is taken out of operation, for example for maintenance purposes and/or for regenerating the catalyst comprised in the at least one of the reactors A. If the first epoxidation subzone comprises two or more epoxidation reactors A, the reactors in operation are operated essentially identically so that in every epoxidation reactor A in operation, a given epoxidation condition is in the same range in every reactor. For example, the temperature in the epoxidation zone is in the same range in every reactor.

The temperature of the cooling medium is the temperature of the cooling medium used for adjusting the temperature of the reaction mixture in the first epoxidation reaction subzone wherein it is preferred that said temperature is adjusted by passing the cooling medium through a cooling jacket of the one or more epoxidation reactors A, wherein the temperature of the cooling medium is preferably the temperature of the cooling medium prior to adjusting the temperature of the reaction mixture, preferably the temperature of the cooling medium at the entrance of the cooling jacket of the one or more epoxidation reactors A. If the first epoxidation subzone comprises two or more epoxidation reactors A, the temperature of the cooling medium relates a given reactor A in operation of the first epoxidation subzone.

According to a first preferred embodiment, the epoxidation zone consists of the first epoxidation subzone.

According to a second preferred embodiment, the epoxidation zone additionally comprises a second epoxidation subzone consisting of one or more epoxidation reactors B wherein, if the second epoxidation subzone comprises two or more epoxidation reactors B, the two or more epoxidation reactors B are arranged in parallel, wherein the second epoxidation subzone is arranged downstream of the first epoxidation subzone. In this case, it is preferred that the effluent stream obtained from the first epoxidation subzone, optionally after a suitable intermediate treatment, is passed into at least one of the epoxidation reactors B. It is possible, for example, that, while the effluent stream obtained from the first epoxidation subzone, optionally after a suitable intermediate treatment, is passed into at least one of the epoxidation reactors B, at least one of the reactors B is taken out of operation, for example for maintenance purposes and/or for regenerating the catalyst comprised in the at least one of the reactors B. If the second epoxidation subzone comprises two or more epoxidation reactors B, the reactors in operation are operated essentially identically so that in every epoxidation reactor B in operation, a given epoxidation condition is in the same range in every reactor. Generally, it is conceivable that in addition to the first epoxidation subzone and the second epoxidation subzone, the epoxidation zone comprises at least one further epoxidation subzone arranged downstream of the second epoxidation subzone. Preferably, according to the second preferred embodiment, the epoxidation zone consists of the first epoxidation subzone and the second epoxidation subzone.

Preferably, the temperature of the reaction mixture in the second epoxidation reaction subzone is not adjusted by passing a cooling medium through a cooling jacket of the one or more epoxidation reactors B. More preferably, the second epoxidation subzone is an essentially adiabatic epoxidation subzone. More preferably, the second epoxidation subzone is an adiabatic epoxidation subzone.

In a 6th aspect, the invention relates to propylene oxide obtained or obtainable from the process according to the

5th aspect.

The present invention is further illustrated by the following set of embodiments and combinations of embodiments resulting from the dependencies and back-references as indicated. In particular, it is noted that in each instance where a range of embodiments is mentioned, for example in the context of a term such as "The ... of any one of embodiments 1 to 4", every embodiment in this range is meant to be explicitly disclosed for the skilled person, i.e. the wording of this term is to be understood by the skilled person as being synonymous to "The ... of any one of embodiments 1, 2, 3, and 4". Further, it is explicitly noted that the following set of embodiments is not the set of claims determining the extent of protection, but represents a suitably structured part of the description directed to general and preferred aspects of the present invention.

1. A zeolitic material having a framework structure comprising Si, O, and Ti, obtained or obtainable from a Ti containing compound, wherein the Ti containing compound has an APHA color number of ≤ 300.

2. The zeolitic material having a framework structure comprising Si, O, and Ti, obtained or obtainable from a Ti containing compound of embodiment 1, wherein the Ti containing compound comprises a Ti containing alcoholate (alkoxide), preferably selected from the group of $Ti(O\text{-alkyl})_4$, wherein each alkyl group is independently selected from branched or unbranched C1 to C6 alkyl; more preferably from the group consisting of tetraethyl orthotitanate ($Ti(OEt)_4$), tetraisopropyl orthotitanate ($Ti(OPr)_4$), tetra-n-butyl orthotitanate $Ti(OBu)_4$ and mixtures of two or more of these compounds; more preferably from the group of tetraethyl orthotitanate ($Ti(OEt)_4$), tetraisopropyl orthotitanate ($Ti(OPr)_4$) and mixtures of $Ti(OEt)_4$ and $Ti(OPr)_4$.

3. The zeolitic material having a framework structure comprising Si, O, and Ti, obtained or obtainable from a Ti containing compound of embodiment 1 or 2, wherein the Ti containing compound comprises at least 90 weight-%, preferably at least 95 weight-%, more preferably at least 96 weight-%, more preferably at least 97 weight-%, more preferably at least 98 weight-%, more preferably at least 99 weight-% of the Ti containing alcoholate based on the overall weight of the Ti containing compound.

4. The zeolitic material having a framework structure comprising Si, O, and Ti, obtained or obtainable from a Ti containing compound of any one of embodiments 1 to 3, wherein the Ti containing compound comprises ≤ 10 weight-%, preferably ≤ 5 weight-%, more preferably ≤ 4 weight-%, more preferably ≤ 3 weight-%, more preferably ≤ 2 weight-%, more preferably ≤ 1 weight-%, based on the overall weight of the Ti containing compound, of a substance of formula (I)

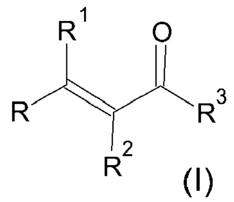

(I)

wherein R, $R^1$ and $R^2$ are independently selected from the group consisting of hydrogen atom and branched or unbranched C1 to C6 alkyl, and $R^3$ is selected from the group consisting of hydrogen atom, branched or unbranched C1 to C6 alkyl, and branched or unbranched C1 to C6 alkenyl.

5. The zeolitic material having a framework structure comprising Si, O, and Ti, obtained or obtainable from a Ti containing compound of embodiments 4, wherein the substance of formula (I) is selected from the group of $CH_3\text{-}CH{=}CH\text{-}C({=}O)\text{-}CH{=}CH\text{-}CH_3$ (hepta-2,5-dien-4-on), $(CH_3)_2C{=}CH\text{-}C({=}O)\text{-}CH{=}C(CH_3)_2$ (phorone, 2,6-dimethyl-hepta-2,5-dien-4-on) and mixtures of hepta-2,5-dien-4-on and 2,6-dimethyl-hepta-2,5-dien-4-on.

6. The zeolitic material having a framework structure comprising Si, O, and Ti, obtained or obtainable from a Ti containing compound of any one of embodiments 1 to 5, wherein the zeolitic material has a titanium dioxide content of ≤ 1.5 weight-%, preferably ≤ 1.2 weight-%, more preferably ≤ 1 weight-%, more preferably ≤ 0.5 weight-%, based on the overall weight of the zeolitic material, wherein preferably at least 98 weight-% of the titanium dioxide are of anatas form, determined according to Reference Example 7.

7. The zeolitic material having a framework structure comprising Si, O, and Ti, obtained or obtainable from a Ti containing compound of any one of embodiments 1 to 6, wherein the zeolitic material has a crystallinity, determined in accordance with Reference Example 7, of more than 85 weight-%, preferably in the range of from 85 to 95 weight-%,

more preferably in the range of from 87 to 93 weight-%, based on the total weight of the zeolitic material.

8. The zeolitic material having a framework structure comprising Si, O, and Ti, obtained or obtainable from a Ti containing compound of any one of embodiments 1 to 7, wherein the zeolitic material exhibits a propylene oxide activity of at least 8.5 weight-%, preferably in the range of from 8.5 to 9.5 weight-%, more preferably in the range of from 8.5 to 9.0 weight-%, determined as described in Reference Example 1.

9 The zeolitic material having a framework structure comprising Si, O, and Ti, obtained or obtainable from a Ti containing compound of any one of embodiments 1 to 8, wherein the zeolitic material exhibits a BET specific surface area in the range of from 440 to 580 $m^2/g$, preferably in the range of from 450 to 570 $m^2/g$, determined as described in Reference Example 4.

10. The zeolitic material having a framework structure comprising Si, O, and Ti, obtained or obtainable from a Ti containing compound of any one of embodiments 1 to 9, wherein 95 to 100 weight-%, preferably from 98 to 100 weight-%, more preferably from 99 to 100 weight-%, more preferably from 99.5 to 100 weight-%, more preferably from 99.9 to 100 weight-% of the zeolitic material consist of Si, O, Ti and optionally H.

11. The zeolitic material having a framework structure comprising Si, O, and Ti, obtained or obtainable from a Ti containing compound of any one of embodiments 1 to 10, wherein the zeolitic material comprises Ti in an amount in the range from 0.2 to 5 weight-%, preferably in the range from 0.5 to 4 weight-%, more preferably in the range from 1.0 to 3 weight-%, more preferably in the range from 1.2 to 2.5 weight-%, more preferably in the range from 1.4 to 2.2 weight-%, calculated as elemental Ti and based on the total weight of the zeolitic material.

12. The zeolitic material having a framework structure comprising Si, O, and Ti, obtained or obtainable from a Ti containing compound of any one of embodiments 1 to 11, wherein the zeolitic material having a framework structure comprising Si, O, and Ti is a titanium zeolite having ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AWO, AWW, BCT, BEA, BEC, BIK, BOG, BPH, BRE, CAN, CAS, CDO, CFI, CGF, CGS, CHA, CHI, CLO, CON, CZP, DAC, DDR, DFO, DFT, DOH, DON, EAB, EDI, EMT, EPI, ERI, ESV, ETR, EUO, FAU, FER, FRA, GIS, GIU, GME, GON, GOO, HEU, IFR, ISV, ITE, ITH, ITQ,ITW, IWR, IWW, JBW, KFI, LAU, LEV, LIO, LOS, LOV, LTA, LTL, LTN, MAR, MAZ, MCM-22(S), MCM-36, MCM-56, MEI, MEL, MEP, MER, MIT-1, MMFI, MFS, MON, MOR, MSE, MSO, MTF, MTN, MTT, MTW, MWW, NAB, NAT, NEES, NON, NPO, OBW, OFF, OSI, OSO, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN SFO, SGT, SOD, SSY, STF, STI, STT, TER, THO, TON, TSC, UEI, UFI, UOZ, USI, UTL, VET, VFI, VNI, VSV, WEI, WEN, YUG, ZON SVR, SVY framework structure or a mixed structure of two or more of these framework types; more preferably the zeolitic material having a framework structure comprising Si, O, and Ti is a titanium zeolite having an MFI framework type, an MEL framework type, an MWW framework type, an MCM-22(S) framework type, an MCM-56 framework type, an IEZ-MWW framework type, an MCM-36 framework type, an ITQ framework type, a BEA framework type, a MOR framework type, or a mixed structure of two or more of these framework types; more preferably an MFI framework type, or an MWW framework type; more preferred the zeolitic material having a framework structure comprising Si, O, and Ti has framework type MFI; more preferably the zeolitic material having a framework structure comprising Si, O, and Ti is a titanium silicalite-1 (TS-1).

13. A Ti containing compound having an APHA color number of ≤ 300 wherein the Ti containing compound comprises a Ti containing alcoholate, preferably selected from the group of $Ti(O\text{-}alkyl)_4$, wherein each alkyl group is independently selected from branched or unbranched C1 to C6 alkyl, more preferably from the group consisting of tetraethyl orthotitanate ($Ti(OEt)_4$), tetraisopropyl orthotitanate ($Ti(OPr)_4$), tetra-n-butyl orthotitanate $Ti(OBu)_4$ and mixtures of two or more of these compounds, more preferably from the group of tetraethyl orthotitanate ($Ti(OEt)_4$), tetraisopropyl orthotitanate ($Ti(OPr)_4$) and mixtures of $Ti(OEt)_4$ and $Ti(OPr)_4$.

14. The Ti containing compound having an APHA color number of ≤ 300 of embodiment 13, wherein the Ti containing compound comprises at least 90 weight-%, preferably at least 95 weight-%, more preferably at least 96 weight-%, more preferably at least 97 weight-%, more preferably at least 98 weight-%, more preferably at least 99 weight-% of the Ti containing alcoholate based on the overall weight of the Ti containing compound.

15. The Ti containing compound having an APHA color number of ≤ 300 of embodiment 13 or 14, wherein the Ti containing compound comprises ≤ 10 weight-%, preferably ≤ 5 weight-%, more preferably ≤ 4 weight-%, more preferably ≤ 3 weight-%, more preferably ≤ 2 weight-%, more preferably ≤ 1 weight-%, based on the overall weight of

the Ti containing compound, of a substance of formula (I),

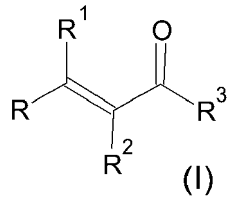

(I)

wherein R, $R^1$and $R^2$ are independently selected from the group consisting of hydrogen atom and branched or unbranched C1 to C6 alkyl, and $R^3$ is selected from the group consisting of hydrogen atom, branched or unbranched C1 to C6 alkyl, and branched or unbranched C1 to C6 alkenyl.

16. The Ti containing compound having an APHA color number of ≤ 300 of any one of embodiments 13 to 15, wherein the substance of formula (I) is selected from the group of $CH_3$-CH=CH-C(=O)-CH=CH-$CH_3$ (hepta-2,5-dien-4-on), $(CH_3)_2$C=CH-C(=O)-CH=C$(CH_3)_2$ (phorone= 2,6-dimethyl-hepta-2,5-dien-4-on) and mixtures of hepta-2,5-dien-4-on and 2,6-dimethyl-hepta-2,5-dien-4-on.

17. Use of a Ti containing compound having an APHA color number of ≤ 300 according to any one of embodiments 13 to 16 for the preparation of a zeolitic material having framework structure comprising Si, O, and Ti according to any one of embodiments 1 to 12.

18. A process for preparation of a zeolitic material having a framework structure comprising Si, O, and Ti, wherein the zeolitic material having a framework structure comprising Si, O, and Ti, is prepared from a Ti containing compound having an APHA color number of ≤ 300, wherein said Ti containing compound is as defined in any one of embodiments 13 to 16.

19. A molding comprising a zeolitic material having a framework structure comprising Si, O, and Ti according to any one of embodiments 1 to 12.

20. The molding of embodiment 19, exhibiting a tortuosity parameter relative to water <4, preferably in the range of from 1.0 to 2.5, more preferably in the range of from 1.3 to 2.0, more preferably in the range of from 1.40 to 1.80, more preferably in the range of from 1.50 to 1.75, more preferably in the range of from 1.55 to 1.70, determined as described in Reference Example 5.

21. The molding of embodiment 19 or 20, wherein the pore volume of the molding determined according to DIN 66133:1993-06 ranges from 0.1 to 1.5 ml/g.

22. Use of a molding according to any one of embodiments 19 to 21 as an adsorbent, an absorbent, a catalyst or a catalyst component, preferably as a catalyst or as a catalyst component, more preferably as a Lewis acid catalyst or a Lewis acid catalyst component, as an isomerization catalyst or as an isomerization catalyst component, as an oxidation catalyst or as an oxidation catalyst component, as an aldol condensation catalyst or as an aldol condensation catalyst component, or as a Prins reaction catalyst or as a Prins reaction catalyst component.

23. The use according to embodiment 22 as an oxidation catalyst or as an oxidation catalyst component, preferably as an epoxidation catalyst or as an epoxidation catalyst component, more preferably as an epoxidation catalyst.

24. The use according to embodiment 23 for the epoxidation reaction of an organic compound having at least one C-C double bond, preferably a C2-C10 alkene, more preferably a C2-C5 alkene, more preferably a C2-C4 alkene, more preferably a C2 or C3 alkene, more preferably propene, more preferably for the epoxidation of propene with hydrogen peroxide as oxidizing agent, more preferably for the epoxidation of propene with hydrogen peroxide as oxidizing agent in a solvent comprising an alcohol, preferably methanol.

25. A process for oxidizing an organic compound comprising bringing an organic compound in contact, preferably in continuous mode, with a catalyst comprising a molding according to any one of embodiments 19 to 21, preferably for epoxidizing an organic compound, more preferably for epoxidizing an organic compound having at least one C-C double bond, preferably a C2-C10 alkene, more preferably a C2-C5 alkene, more preferably a C2-C4 alkene, more

preferably a C2 or C3 alkene, more preferably propene.

26. The process according to embodiment 25, wherein hydrogen peroxide is used as oxidizing agent, wherein the oxidation reaction is preferably carried out in a solvent, more preferably in a solvent comprising an alcohol, preferably methanol.

27. A process for preparing propylene oxide comprising reacting propene, preferably in continuous mode, with hydrogen peroxide in a solvent in the presence of a catalyst comprising a molding according to any one of embodiments 19 to 21 to obtain propylene oxide.

28. The process process for preparing propylene oxide of embodiment 27, wherein reacting propene with hydrogen peroxide in a solvent in the presence of a catalyst is carried out in an epoxidation zone at an absolute pressure in the epoxidation zone in the range from 0.5 to 5.0 MPa, preferably in the range from 1.5 to 3.0 MPa, more preferably in the range from 1.8 to 2.8 MPa.

29. The process process for preparing propylene oxide of embodiment 27 or 28, wherein reacting propene with hydrogen peroxide in a solvent in the presence of a catalyst is carried out in an epoxidation zone at a temperature in the epoxidation zone in the range from 33 to 73 °C, preferably in the range from 38 to 63 °C, more preferably in the range from 53 to 63 °C.

30. The process process for preparing propylene oxide of any one of embodiments 27 to 29, wherein a cooling medium is used for adjusting the temperature in the epoxidation zone, wherein the temperature of the cooling medium is preferably in the range from 25 to 65 °C, preferably in the range from 30 to 55 °C, more preferably in the range from 345 to 55 °C.

31. The process process for preparing propylene oxide of any one of embodiments 27 to 30, wherein the weight ratio of propylene : hydrogen peroxide (w/w) is in the range from 1:1 to 6:1, preferably in the range from 1:1 to 2:1 or in the range from 4 :1 to 5:1.

32. The process process for preparing propylene oxide of any one of embodiments 27 to 31, wherein the weight ratio of solvent : hydrogen peroxide (w/w) is in the range from 15:1 to 5:1, preferably in the range from 12:1 to 6:1, more preferably in the range from 11:1 to 8:1.

33. The process process for preparing propylene oxide of any one of embodiments 27 to 32, wherein the weight ratio of solvent : propylene (w/w) in the reaction mixture is in the range from 10:1 to 1:0.1, preferably in the range from 9:1 to 1:1, more preferably in the range from 9:1 to 7:1 or in the range from 1.5:1 to 1:1.

34. The process process for preparing propylene oxide of any one of embodiments 27 to 33, wherein the epoxidation reaction conditions comprise trickle-bed conditions.

35. The process process for preparing propylene oxide of any one of embodiments 27 to 33, wherein the epoxidation reaction conditions comprise fixed-bed conditions.

36. The process of any one of embodiments 27 to 35, wherein the solvent is an organic solvent, preferably an organic epoxidation solvent, more preferably selected from the group consisting of alcohol, acetonitrile, *tert*-butanol, propionitrile and mixtures of two or more thereof; more preferably selected from the group consisting of alcohol, acetonitrile and mixtures of alcohol and acetonitrile, more preferred the solvent comprises at least an alcohol; more preferred the solvent comprises at least methanol.

37. Propylene oxide obtained or obtainable from the process according to any one of embodiments 27 to 36.

It is explicitly noted that the preceding set of embodiments is not the set of claims determining the extent of protection, but represents a suitably structured part of the description directed to general and preferred aspects of the present invention.

The present invention is further illustrated by the following reference examples, comparative examples, and examples.

**Examples**

**Reference Example 1: Determination of the propylene oxide activity and the pressure drop rate (PO test)**

In the PO test, a preliminary test procedure to assess the possible suitability of the powders as described in detail herein below as catalyst for the epoxidation of propene, powders were tested in a glass autoclave by reaction of propene with an aqueous hydrogen peroxide solution (30 weight-%) to yield propylene oxide. In particular, 0.5 g of the respective powder were introduced together with either 45 ml of methanol or 45 ml acetonitrile in a glass autoclave, which was cooled to -25 °C. 20 ml of liquid propene was pressed into the glass autoclave and the glass autoclave was heated to 0 °C. At this temperature, 18 g of an aqueous hydrogen peroxide solution (30 weight-% in water) were introduced into the glass autoclave. After a reaction time of 5 h at 0 °C , the mixture was heated to room temperature (25 °C) and the liquid phase was analyzed by gas chromatography with respect to its propylene oxide content. The propylene oxide content of the liquid phase (in weight-%) is the result of the PO test, i.e. the propylene oxide activity of the powder.

**Reference Example 2: Determination of the propylene epoxidation catalytic performance**

In a continuous epoxidation reaction setup, a vertically arranged tubular reactor (length: 1.4 m, outer diameter 10 mm, internal diameter: 4 mm; material: stainless austenitic steel of type 1.4571) equipped with a cooling jacket for thermostatization, was charged with 15 g of the moldings of the respective TS-1 catalyst in the form of strands as described in the respective Examples and Comparative Examples below. The area within the reactor covered by the moldings is called the catalyst bed. The remaining reactor volume was filled with inert material (steatite spheres, 2 mm in diameter) to a height of about 5 cm at the lower end of the reactor and the remainder at the top end of the reactor. The temperature in the epoxidation zone (=catalyst bed) was measured with a tenfold thermocouple (ten thermoelements, each made of stainless austenitic steel of type 1.4571). Six of the ten thermoelements were located in the first half of the catalyst bed.

Feed streams were provided for all starting materials methanol, propylene and hydrogen peroxide. Through the reactor, the starting materials were passed with the following flow rates: methanol (49 g/h); hydrogen peroxide (9 g/h; employed as aqueous hydrogen peroxide solution with a hydrogen peroxide content of 40 weight-%); propylene (7 g/h; polymer grade).

Via the cooling medium passed through the cooling jacket, an average temperature in the epoxidation zone was adjusted in the range of from 60 to 70 °C so that the hydrogen peroxide conversion, determined on the basis of the reaction mixture leaving the reactor, was essentially constant at 90 %. The pressure within the reactor was held constant at 21 bar(abs), and the reaction mixture - apart from the fixed-bed catalyst - consisted of one single liquid phase.

The reactor effluent stream downstream the pressure control valve was collected, weighed and analyzed. Organic components were analyzed in two separate gas-chromatographs. The hydrogen peroxide content was determined colorimetrically using the titanyl sulfate method. The selectivity for propylene oxide was determined relative to hydrogen peroxide (S($H_2O_2$) to PO), and was calculated as 100 times the ratio of moles of propylene oxide in the effluent stream (mol (PO produced)) divided by the moles of hydrogen peroxide in the feed (mol ($H_2O_2$ feed)) as follows in formula (1):

$$\mathrm{S(H_2O_2)\ to\ PO} = \frac{mol\ (PO\ produced)}{mol\ (H2O2\ feed)}\ x\ 100\ (1)$$

**Reference Example 3: Determination of $N_2$ adsorption/desorption isotherms**

The nitrogen adsorption/desorption isotherms ($N_2$ sorption isotherms) were determined at 77 K according to the method disclosed in DIN 66131:1993-07. The $N_2$ sorption isotherms, at the temperature of liquid nitrogen, were measured using Micrometrics ASAP 2020M and Tristar system.

**Reference Example 4: Determination of the BET specific surface area**

The BET specific surface area was determined via nitrogen physisorption at 77 K according to the method disclosed in DIN 66131:1993-07. The $N_2$ sorption isotherms at the temperature of liquid nitrogen were measured using Micrometrics ASAP 2020M and Tristar system for determining the BET specific surface area as in Reference Example 3.

**Reference Example 5: Determination of the tortuosity parameter relative to water**

PFG NMR enables the destruction free examination of thermal molecular motion, in free gases and liquids, in macro and supra molecular solutions and of adsorbed molecules in porous systems. The principle and applications are as described in US 2007/0099299 A1. From the diffusion coefficient obtained by NMR as described below, the tortuosity

factor was calculated. The tortuosity factor of a porous material is determined from the self diffusion coefficient of a probe molecule in the porous system ($D_{eff}$) and the self diffusion coefficient of the free liquid ($D_0$) according to formula (2) (see S. Kolitcheff, E. Jolimaitre, A. Hugon, J. Verstraete, M. Rivallan, P-L. Carrette, F. Couenne and M. Tayakout-Fayolle, Catal. Sci. Technol., 2018, 8, 4537; and F. Elwinger, P. Pourmand, and I. Furo, J. Phys. Chem. C. 2017, 121, 13757-13764):

$$\tau = \frac{D_0}{D_{eff}} \qquad (2).$$

The free diffusion coefficient for water was taken as 2.02 x $10^{-9}$ $m^2s^{-1}$ at 20 °C (see M. Holz, S. R. Heil and A. Sacco. Phys. Chem. Chem. Phys., 2000, 2, 4740-4742).

**Determination of the diffusion coefficient by NMR**

Samples were prepared for NMR analyses by drying a small quantity (0.05-0.2 g) of molded catalyst at T > 350 °C under vacuum overnight in NMR measurement tubes. The sample was then filled via a vacuum line with nanopure water (Millipore Advantage A10) to 90 % of the pore volume of the catalyst support (determined by Hg-porosimetry). The filled sample was then flame sealed into the measurement tube and left overnight before measurement.

The NMR analyses to determine $D_{eff}$ for water in the catalyst materials were conducted at 20 °C and 1 bar at 400 MHz 1H resonance frequency with Bruker Avance III NMR spectrometer. A Bruker Diff50 probe head was used with Bruker Great 60A gradient amplifiers. A temperature of 20 °C was maintained with water cooled gradient coils. The pulse program used for the PFG NMR self-diffusion analyses was the stimulated spin echo with pulsed field gradients according to Fig. 1b of US 2007/0099299 A1. For each sample, the spin echo attenuation curves were measured at different diffusion times (between 20 and 100 ms) by stepwise increase in the intensity of the field gradients (to a maximum gmax= 3 T/m). The gradient pulse length was 1 ms. Spin echo attenuation curves were fitted to equation 6 of US 2007/0099299 A. The slope of each line corresponds to a diffusion coefficient. The average diffusion coefficient, across all diffusion times, was used to calculate tortuosity for each catalyst support, according to Formula (2) above.

**Reference Example 6: Preparing a molding using a colloidal silica binder precursor**

Shaping: Particles of the respective zeolitic material (105.3 g) from the Examples 3 and 4 and Comparative Examples 1 and 2 below and carboxymethyl cellulose (4.0 g; Walocel(TM), Mw = 15,000 g) were mixed in a kneader for 5 min. Then, an aqueous polystyrene dispersion (100.7 g; 33.7 g polystyrene) was continuously added. After 10 min, polyethylene oxide (1.33 g) was added. After 10 min, 70 g Ludox® AS 40 (40 wt.-% silica in water) were added. After a further 10 min, 10 ml water were added, after further 5 min additional 10 ml water. The total kneading time was 40 min. The resulting formable mass obtained from kneading was extruded at a pressure of 130 bar through a matrix having circular holes with a diameter of 1.9 mm. The obtained strands were dried in air in an oven at a temperature of 120 °C for 4 h and calcined in air at a temperature of 490 °C for 5 h.

Water treatment: 36 g of these strands were mixed in four portions of each 9 g with 180 g deionized water per portion. The resulting mixtures were heated to a temperature of 145 °C for 8 h in an autoclave. Thereafter, the obtained water-treated strands were separated and sieved over a 0.8 mm sieve. The obtained strands were then washed with deionized water and subjected to a stream of nitrogen at ambient temperature. The respectively washed strands were subsequently dried in air at a temperature of 120 °C for 4 h and then calcined in air at a temperature of 450 °C for 2 h.

**Reference Example 7: X-ray powder diffraction and determination of the crystallinity**

Powder X-ray diffraction (PXRD) data was collected using a diffractometer (D8 Advance Series II, Bruker AXS GmbH) equipped with a LYNXEYE detector operated with a Copper anode X-ray tube running at 40kV and 40mA. The geometry was Bragg-Brentano, and air scattering was reduced using an air scatter shield.

Computing crystallinity: The crystallinity of the samples was determined using the software DIFFRAC.EVA provided by Bruker AXS GmbH, Karlsruhe. The method is described on page 121 of the user manual. The default parameters for the calculation were used.

Computing phase composition: The phase composition was computed against the raw data using the modelling software DIFFRAC.TOPAS provided by Bruker AXS GmbH, Karlsruhe. The crystal structures of the identified phases, instrumental parameters as well the crystallite size of the individual phases were used to simulate the diffraction pattern. This was fit against the data in addition to a function modelling the background intensities.

Data collection: The samples were homogenized in a mortar and then pressed into a standard flat sample holder provided by Bruker AXS GmbH for Bragg-Brentano geometry data collection. The flat surface was achieved using a glass plate to compress and flatten the sample powder. The data was collected from the angular range 2 to 70 ° 2Theta with a

step size of 0.02 ° 2Theta, while the variable divergence slit was set to an angle of 0.1 °. The crystalline content describes the intensity of the crystalline signal to the total scattered intensity (User Manual for DIFFRAC.EVA, Bruker AXS GmbH, Karlsruhe).

**Example 1: Determination of APHA color and organic impurities**

A) Determination of organic substances in tetraethylorthotitanate ($Ti(OEt)_4$) of different APHA color and in tetraisopropyl orthotitanate ($Ti(OPr)_4$) of different APHA color

Samples of $Ti(OEt)_4$) with different APHA color number were analyzed for their content of organic substances. The APHA color was determined using a Lico®620 Colorimeter according to DIN EN ISO 6271:2016-05 (Hazen color value).

Before quantification of the organic impurities, the precipitate ($TiO_2$) that had formed over time was filtered off. The quantification was done by HPLC/CE - Derivatized with DNPH (2,4-dinitrophenylhydrazine); column: Symmetry Shield RP18, 5 μm 2.1×150 mm, Waters; 45 °C; 0.4 ml/min; runtime 45 min, UV detector. The identity of the substances in the organic phase was double-checked via GC/MS (column: Restek #13623; RXI-5silMS, 30 m × 0,25 mm × 0,25 μm; inlet temperature: 200 °C; temperature program: 1) 35 °C for 7 min, 2) ramp to 220 °C with 8 °C/min), the results are shown below in Table 1:

**Table 1**

| Amount of hepta-2,5-dien-4-on in $Ti(OEt)_4$) samples with different APHA color number | |
|---|---|
| APHA color number | Amount of hepta-2,5-dien-4-on [ppm] |
| 68 | 0 |
| 157 | 1068 |
| 256 | 2440 |
| 278 | 2829 |
| 316 | 3277 |

Acetaldehyde and crotonaldehyde were clearly identified by comparison with database spectra; the quantification in the sample with APHA color number 68 was done by HPLC/CE - Derivatized with DNPH (2,4-Dinitrophenylhydrazine); Column: Symmetry Shield RP18 , 5μm 2.1*150mm, Waters; 45 °C; 0.4 ml/min; runtime 45 min, UV detector. The respective amounts were:

| | |
|---|---|
| Acetaldehyde: | 55 mg/kg (55 weight-ppm) |
| Crotonaldehyde: | 12 mg/kg (12 weight-ppm) |

Samples of tetraisopropyl orthotitanate ($Ti(OPr)_4$) with different APHA color number were analysed for their content of organic substances. The APHA color was determined using a Lico®620 Colorimeter according to DIN EN ISO 6271:2016-05 (Hazen color value).

Before quantification of the organic impurities, the precipitate ($TiO_2$) that had formed over time was filtered off. The organic phase was then analyzed via GC/MS (column: Restek #13623; RXI-5silMS, 30 m × 0,25 mm × 0,25 μm; inlet temperature: 200 °C; temperature program: 1) 35 °C for 7 min, 2) ramp to 220 °C with 8 °C/min), the results are shown below in Table 2:

**Table 2**

| Amount of 2,6-dimethyl-hepta-2,5-dien-4-on in $Ti(OPr)_4$ samples with different APHA color number | |
|---|---|
| APHA color number | Amount of 2,6-dimethyl-hepta-2,5-dien-4-on [ppm] |
| 75 | 0 |
| 212 | 1980 |
| 323 | 3100 |

Acetone and 4-methyl-3-penten-2-on were clearly identified by comparison with database spectra; quantification in the sample with APHA color number 75 was done by HPLC/CE - Derivatized with DNPH (2,4-Dinitrophenylhydrazine); Column: Symmetry Shield RP18 , 5µm 2.1×150mm, Waters; 45 °C; 0.4 ml/min; runtime 45 min, UV detector. The the respective amounts were:

| | |
|---|---|
| Acetone: | 23 mg/kg (23 ppm) |
| 4-methyl-3-penten-2-on: | 5 mg/kg (5 ppm) |

B) Determination of APHA color of tetraethylorthotitanate in different tetraethylorthotitanate ($Ti(OEt)_4$) probes

The APHA color of different tetraethylorthotitanate ($Ti(OEt)_4$) probes was determined using a Lico®620 Colorimeter according to DIN EN ISO 6271:2016-05 (Hazen color value).

A fresh and visually clear tetraethylorthotitanate probe (tetraethylorthotitanate purchased from Merck) was used as reference. The results are indicated in Table 3.

**Table 3**

| APHA color of different tetraethylorthotitanate probes | |
|---|---|
| Probe | APHA color number |
| reference | 102 |
| 1 | 251 |
| 2 | 300 |
| 3 | >1000 |
| 4 | >1000 |

C) Determination of APHA color of tetrabutylorthotitanate in different ($Ti(OBu)_4$) probes

The APHA color of different tetrabutylorthotitanate ($Ti(OBu)_4$) probes was determined using a Lico®620 Colorimeter according to DIN EN ISO 6271:2016-05 (Hazen color value).

A fresh and visually clear tetrabutylorthotitanate probe (tetrabutylorthotitanate purchased from Merck) was used as reference. The results are indicated in Table 4.

**Table 4**

| APHA color of different tetrabutylorthotitanate probes | |
|---|---|
| Probe | APHA color number |
| 5 | 171 |
| 6 | 537 |

**Example 2: Synthesis of TS1-1 catalyst**

A titanium silicalite-1 (TS-1) powder was prepared according to the following recipe:

Initial weights:

| | |
|---|---|
| tetraethyl orthosilicate | 500 g |
| tetraethylorthotitanate (reference from Example 1) | 15 g |
| tetrapropylammonium hydroxide (40 weight-% aqueous solution) | 220 g |
| deionized water | 300 g |

Tetraethyl orthosilicate and tetraethylorthotitanate having an APHA color number of 102 (Reference from Example 1) were added into a four-neck flask. Deionized water and aqueous tetrapropylammonium hydroxide were added under stirring at 200 U/min. The pH value of the solution, determined by a pH electrode, was 13.54. The solution was hydrolyzed for 60 min at room temperature (25 °C), wherein the temperature increased up to 60 °C.
Ethanol formed during the reaction was removed by distillation until the temperature in the flask sump of 95 °C was reached. The amount of ethanol removed was 547 g, the pH value in the sump was11.98. The remaining gel was stirred until it had a temperature of 40 °C. 530 g deionized water were added under stirring, the pH value of the resulting solution, determined with a pH electrode, was 11.52.
The resulting solution was then transferred into an autoclave and heated under stirring to 175 °C. Crystallization was performed at 175 °C within 16 h at autogenous pressure under stirring (revolution speed 200 U/min, torque in the range from 50 to 70 N/cm, pressure in the range from 9 to 10 bar).
The suspension containing titanium silicalite-1 crystals was transferred into another vessel, where it was diluted with deionized water in a volume ratio of 1:1 under stirring at 200 U/min, Teflon-horseshoe mixer). Afterwards, about 215.8 g of a 10-weight-% aqueous $HNO_3$ solution were added so that the pH value, determined with a pH electrode, decreased to 7, followed by filtration (porcelain suction, blue band filter). The filter cake was washed three times with 1000 ml deionised water each, followed by drying in a ventilated muffle over at 120 °C for 4 hours and subsequent calcination under air at 490 °C for 5 hours (Heating rate 2 °C/min).
A zeolitic material in form of a powder was obtained in 88 weight-% based on the weight of the initial tetraethylorthotitanate. Based on crystallinity and phase composition data determined according to Reference Example 7, 100 weight-% of the obtained particles were of TS-1 structure (anatas content ($TiO_2$) of 0 weight-%), and exhibited a Ti content of 2.0 weight-%, calculated as elemental Ti, an Si content of 42 weight-%, calculated as elemental Si, based on the overall weight of the obtained particles. The BET specific surface area of the powder, determined according to Reference Example 4, was 563 $m^2/g$.
The powder's absorption of diffuse reflected light was measured with a UV/VIS/NIR spectral photometer Lambda 950 with 150 mm integrating sphere (Ulbrichtkugel) with indication of the lamp switching point. Based on the % R-spectra, a Kubelka-Munk Transformation (KM) was carried out, the results are shown in Fig. 2. No significant bands could be found above 330 nm (about 330 nm to about 350 nm), which indicates the absence of significant amounts of anatas.
Moldings were prepared according to Reference Example 6.

**Example 3: Synthesis of TS1-1 catalyst**

A titanium silicalite-1 (TS-1) powder was prepared according to the following recipe:

Initial weights:

| | |
|---|---|
| tetraethyl orthosilicate | 500 g |
| tetraethylorthotitanate (probe no. 1 from Example 1) | 15 g |
| tetrapropylammonium hydroxide (40 weight-% aqueous solution) | 220 g |
| deionized water | 300 g |

Tetraethyl orthosilicate and tetraethylorthotitanate having an APHA color number of 251 (probe no. 1 from Example 1) were added into a four-neck flask. Deionized water and aqueous tetrapropylammonium hydroxide were added under stirring at 200 U/min. The pH value of the solution, determined with a pH electrode, was 13.56. Further steps were conducted as in Example 2.
After calcination, a zeolitic material in form of a powder was obtained in 93 weight-% based on the weight of the initial tetraethylorthotitanate. Based on crystallinity and phase composition data determined according to Reference Example 7, 100 % of the obtained particles were of TS-1 structure (anatas ($TiO_2$) content of 0 weight-%). The particles exhibited a Ti content of 2.0 weight-%, calculated as elemental Ti, and a Si content of 44 weight-%, calculated as elemental Si, based on the overall weight of the obtained particles. The BET specific surface area of the powder, determined according to Reference Example 4, was 462 $m^2/g$.
The powder's absorption of diffuse reflected light was determined as in Example 2, the resulting spectrum from Kubelka-Munk Transformation (KM) is shown in Fig. 2. No significant bands could be found above 330 nm (about 330 nm to about 350 nm), which indicates the absence of significant amounts of anatas.
Moldings were prepared according to Reference Example 6. The resulting strands after water treatment and calcination had a tortuosity parameter relative to water, as determined according to Reference Example 5, of 1.6. The

porosity/pore volume, as determined by Hg porosimetry according to DIN 66133:1993-06, was 0.92 ml/g.

**Example 4: Synthesis of TS1-1 catalyst**

A titanium silicalite-1 (TS-1) powder was prepared according to the following recipe:

Initial weights:

| | |
|---|---|
| tetraethyl orthosilicate | 500 g |
| tetraethylorthotitanate (probe no. 2 from Example 1) | 15 g |
| tetrapropylammonium hydroxide (40 weight-% aqueous solution) | 220 g |
| deionized water | 300 g |

Tetraethyl orthosilicate and tetraethylorthotitanate having an APHA color number of 300 (probe no. 2 from Example 1) were added into a four-neck flask. Deionized water and aqueous tetrapropylammonium hydroxide were added under stirring at 200 U/min. The pH value of the solution, determined with a pH electrode, was 13.50. Further steps were conducted in accordance with Example 2.

After calcination, a zeolitic material in form of a powder was obtained in 91 weight-% based on the weight of the initial tetraethylorthotitanate. Based on crystallinity and phase composition data determined according to Reference Example 7, 99.0 weight-% of the obtained particles were of TS-1 structure with 1.0 weight-% anatas, based on the overall weight of the obtained particles. The particles exhibited a Ti content of 2.0 weight-%, calculated as elemental Ti, and a Si content of 45 weight-%, based on the overall weight of the obtained particles. The BET specific surface area of the powder, determined according to Reference Example 4, was 437 $m^2/g$.

The powder's absorption of diffuse reflected light was determined as in Example 2, the resulting spectrum from Kubelka-Munk Transformation (KM) is shown in Fig. 2. A significant band could be found above 330 nm (about 330 nm to about 350 nm), which indicates the presence of significant amounts of anatas.

Moldings were prepared according to Reference Example 6. The resulting strands after water treatment and calcination had a tortuosity parameter relative to water, as determined according to Reference Example 5, of 2.2. The porosity/pore volume, as determined by Hg porosimetry according to DIN 66133:1993-06, was 0.84 ml/g.

**Comparative Example 1: Synthesis of TS1-1 catalyst**

A titanium silicalite-1 (TS-1) powder was prepared according to the following recipe:

| Initial weights: | |
|---|---|
| tetraethyl orthosilicate | 500 g |
| tetraethylorthotitanate (probe no.3 from Example 1) | 15 g |
| tetrapropylammonium hydroxide (40 weight-% aqueous solution) | 220 g |
| deionized water | 300 g |

Tetraethyl orthosilicate and tetraethylorthotitanate having an APHA color number > 1000 (probe no. 3 from Example 1) were added into a four-neck flask. Deionized water and aqueous tetrapropylammonium hydroxide were added under stirring at 200 U/min. The pH value of the solution, determined with a pH electrode, was 13.48. Further steps were conducted in accordance with Example 2.

After calcination, a zeolitic material in form of a powder was obtained in 92 weight-% based on the weight of the initial tetraethylorthotitanate. Based on crystallinity and phase composition data determined according to Reference Example 7, 98.7 weight-% of the obtained particles were of TS-1 structure with 1.3 weight-% anatas, based on the overall weight of the obtained particles. The particles exhibited a Ti content of 2.0 weight-%, calculated as elemental Ti, and a Si content of 43 weight-%, based on the overall weight of the obtained particles. The BET specific surface area of the powder, determined according to Reference Example 4, was 455 $m^2/g$.

The powder's absorption of diffuse reflected light was determined as in Example 2, the resulting spectrum from Kubelka-Munk Transformation (KM) is shown in Fig. 2. A significant band could be found above 330 nm (about 330 nm to about 350 nm), which indicates the presence of significant amounts of anatas.

Moldings were prepared according to Reference Example 6. The resulting strands after water treatment and calcination had a tortuosity parameter relative to water, as determined according to Reference Example 5, of 1.4. The porosity/pore volume, as determined by Hg porosimetry according to DIN 66133:1993-06, was 0.91 ml/g.

**Comparative Example 2: Synthesis of TS1-1 catalyst**

A titanium silicalite-1 (TS-1) powder was prepared according to the following recipe:

Initial weights:

| | |
|---|---|
| tetraethyl orthosilicate | 500 g |
| tetraethylorthotitanate (probe no. 4 from Example 1) | 15 g |
| tetrapropylammonium hydroxide (40 weight-% aqueous solution) | 220 g |
| deionized water | 300 g |

Tetraethyl orthosilicate and tetraethylorthotitanate having an APHA color number > 1000 (probe no. 4 from Example 1) were added into a four-neck flask. Deionized water and aqueous tetrapropylammonium hydroxide were added under stirring at 200 U/min. The pH value of the solution, determined with a pH electrode, was 13.48. Further steps were conducted in accordance with Example 2.

After calcination, a zeolitic material in form of a powder was obtained in 89 weight-% based on the weight of the initial tetraethylorthotitanate. Based on crystallinity and phase composition data determined according to Reference Example 7, 98.5 weight-% of the obtained particles were of TS-1 structure with 1.5 weight-% anatas, based on the overall weight of the obtained particles. The particles exhibited a Ti content of 2.0 weight-%, calculated as elemental Ti, and and Si content of 44 weight-%, based on the overall weight of the obtained particles. The BET specific surface area of the powder, determined according to Reference Example 4, was 461 $m^2/g$.

The XRD spectra of the solid obtained is shown in Fig. 1.

The powder's absorption of diffuse reflected light was determined as in Example 2, the resulting spectrum from Kubelka-Munk Transformation (KM) is shown in Fig. 2. A significant band could be found above 330 nm (about 330 nm to about 350 nm), which indicates the presence of significant amounts of anatas.

Moldings were prepared according to Reference Example 6. The resulting strands after water treatment and calcination had a tortuosity parameter relative to water, as determined according to Reference Example 5, of 1.3. The porosity/pore volume, as determined by Hg porosimetry according to DIN 66133:1993-06, was 0.98 ml/g.

**Example 6: Synthesis of TiMWW catalyst**

A deboronated zeolitic material having MWW framework type was prepared according to Example 1 of WO 2013/117537 A1. The spray-dried deboronated zeolitic material of framework type MWW (deboronated MWW) obtained had a B content of 0.08 wt.-%, an Si content of 42 wt.-%, and a TOC of 0.23 wt.-%.

A titanium zeolite having MWW framework type (TiMWW) in powder form was prepared according to the following recipe:

Initial weights:

| | |
|---|---|
| Piperidine | 303.1 g |
| tetrabutylorthotitanate | 43.13 g |
| deboronated MWW | 200 g |
| deionized water | 821.8 g |

Piperidine was added to a beaker with 500 g deionised water and stirred for 10 min at 200 rpm.

Tetrabutylorthotitanate having an APHA color number of 171 (probe no. 5 from Example 1) was added under stirring. After 15 min of stirring, 321.8 g demineralized water was added followed by further 15 min of stirring. The

deboronated MWW was added and the suspension was stirred for 60 min. The suspension was subsequently transferred to a 2.5 liter autoclave and heated under stirring to 170°C for 48 h. After cooling down, the suspension filtered over a porcelain filter, washed with deionised water and the filter cake was dried for 10 h at 120°C. 90 g of the dried material was added under stirring (200 rpm) to a 4-neck round bottom flask containing 1800 g of a 10% $HNO_3$ solution. The suspension was heated to 100°C under reflux for 1h and after cooling filtered over a porcelain filter and washed with three times 1000 ml deionized water. The filter cake was dried at 120°C for 4 h and the powder was calcined for 5 h at 550 °C (heating ramp 2°C/min).

After calcination, a zeolitic material (TiMWW) in form of a powder was obtained. The crystallinity, determined according to Reference Example 7, was 82 %. The particles exhibited a Ti content of 2.1 weight-%, calculated as elemental Ti, and and Si content of 41 weight-%, based on the overall weight of the obtained particles.

The powder's absorption of diffuse reflected light was determined as in Example 2, the resulting spectrum from Kubelka-Munk Transformation (KM) is shown in Fig. 3. No significant band could be found above 330 nm (about 330 nm to about 350 nm), which could have indicated the presence of significant amounts of anatas.

**Comparative Example 3: Synthesis of TiMWW catalyst**

A deboronated zeolitic material having MWW framework type was prepared according to Example 1 of WO 2013/117537 A1. The spray-dried deboronated zeolitic material of framework type MWW (deboronated MWW) obtained had a B content of 0.08 wt.-%, an Si content of 42 wt.-%, and a TOC of 0.23 wt.-%.

A titanium zeolite having MWW framework type (TiMWW) in powder form was prepared according to the following recipe:

Initial weights:

| | |
|---|---|
| Piperidine | 303.1 g |
| tetrabutylorthotitanate | 43.13 g |
| deboronated MWW | 200 g |
| deionized water | 821.8 g |

Piperidine was added to a beaker with 500 g deionised water and stirred for 10 min at 200 rpm.

Tetrabutylorthotitanate having an APHA color number of 537 (probe no. 6 from Example 1) was added under stirring. After 15 min of stirring, 321.8 g demineralized water was added followed by further 15 min of stirring. The deboronated MWW was added and the suspension was stirred for 60 min. The suspension was subsequently transferred to a 2.5 liter autoclave and heated under stirring to 170°C for 48 h. After cooling down, the suspension filtered over a porcelain filter, washed with deionised water and the filter cake was dried for 10 h at 120°C. 90 g of the dried material was added under stirring (200 rpm) to a 4-neck round bottom flask containing 1800 g of a 10% $HNO_3$ solution. The suspension was heated to 100°C under reflux for 1h and after cooling filtered over a porcelain filter and washed with three times 1000 ml deionized water. The filter cake was dried at 120°C for 4 h and the powder was calcined for 5 h at 550 °C (heating ramp 2°C/min).

After calcination, a zeolitic material (TiMWW) in form of a powder was obtained. The crystallinity, determined according to Reference Example 7, was 74 %. The particles exhibited a Ti content of 1.9 weight-%, calculated as elemental Ti, and and Si content of 42 weight-%, based on the overall weight of the obtained particles.

The powder's absorption of diffuse reflected light was determined as in Example 2, the resulting spectrum from Kubelka-Munk Transformation (KM) is shown in Fig. 3. The shoulder above 330 nm (about 330 nm to about 350 nm), visible in the enlarged section of Fig. 3 on the right side, indicated the presence of certain amounts of anatas.

**Example 7: Epoxidation of propene**

**Example 7.1: Preliminary Test - PO Test**

*a) TS-1 with methanol as solvent*

TS-1 powders from the Examples 2, 3 and 4 and of the Comparative Examples 1 and 2 were preliminarily tested with respect to their general suitability as epoxidation catalysts according to the PO test as described in Reference Example 1, using methanol (45 ml) as solvent. The respective resulting values of the propylene oxide activity, as well as a

summary of the powder characteristics, are shown in Table 5 below.

**Table 5**

| Results for catalytic testing according to Reference Example 1 and TS-1 powder characteristics | | | | | | | |
|---|---|---|---|---|---|---|---|
| Powder according to # | APHA color number of Ti containing compound (tetraethylorthotitanate, $Ti(OEt)_4$) | Xstal. TS-1 % | Ti, wt. % | Si, wt. % | Anatas, wt. % | BET, $m^2/g$ | propylene oxide activity [%] |
| Example 2 | 102 | 88 | 2.0 | 42 | 0 | 563 | 8.8 |
| Example 3 | 251 | 93 | 2.0 | 44 | 0 | 462 | 8.90 |
| Example 4 | 300 | 91 | 2.0 | 45 | 1.0 | 437 | 8.7 |
| Comparative Example 1 | >1000 | 92 | 2.0 | 43 | 1.3 | 455 | 8.40 |
| Comparative Example 2 | >1000 | 89 | 2.0 | 44 | 1.5 | 461 | 8.10 |

The results above show that the catalysts prepared from tetraethylorthotitanate with higher APHA color number than 300 results in poor epoxidation performance. Obviously, the TS-1 powders prepared from tetraethylorthotitanate with APHA color number ≤300 exhibit a very good propylene oxide activity according to the PO test and are promising candidates for catalysts in industrial continuous epoxidation reactions.

*b) TiMWW with acetonitrile as solvent*

TiMWW powders from the Example 6 and Comparative Example 3 were preliminarily tested with respect to their general suitability as epoxidation catalysts according to the PO test as described in Reference Example 1, using acetonitrile (45 ml) as solvent. The respective resulting values of the propylene oxide activity, as well as a summary of the powder characteristics, are shown in Table 6 below.

**Table 6**

| Results for catalytic testing according to Reference Example 1 and TiMWW powder characteristics | | | | | |
|---|---|---|---|---|---|
| Powder according to # | APHA color number of Ti containing compound (tetrabutylortho-titanate, $Ti(OBu)_4$) | Xstal. % | Ti, wt. % | Si, wt. % | propylene oxide activity [%] |
| Example 6 | 171 | 82 | 2.1 | 41 | 13.5 |
| Comparative Example 3 | 537 | 74 | 1.9 | 42 | 13.0 |

The results above show that the TiMWW catalysts prepared from tetrabutylorthotitanate with APHA color number > 300 already exhibited a good propylene oxide activity according to the PO test. However, it could be seen that using a Ti containing compound having an APHA color number of < 300 further improved the result in the PO test, indicating that the TiMWW powders prepared from tetrabutylorthotitanate with APHA color number ≤300 are promising candidates for catalysts in industrial continuous epoxidation reactions.

**Example 7.2: Catalytic characteristics of the moldings in a continuous epoxidation reaction**

The characteristics of the moldings of the Examples 2, 3, 4 and of the Comparative Examples 1 and 2 (TS-1 catalysts) were investigated in a continuous epoxidation reaction as described in Reference Example 2. The hydrogen peroxide conversion, determined on the basis of the reaction mixture leaving the reactor, was kept essentially constant at 90 % as described in Reference Example 2. Over the time on stream (TOS), the selectivity for propylene oxide given was determined relative to hydrogen peroxide ($S(H_2O_2)$ to PO). Epoxidation was conducted for 550 h.

The resulting selectivity towards propylene oxide (PO) ($S(H_2O_2)$ to PO, calculated according to Reference Example 1) based on the data measured at the end of the epoxidation (at 500 h), the temperature of the cooling medium and the average temperature in the epoxidation zone are indicated in Table 7. Table 7 below also indicates the APHA color number of the respective Ti containing compound used for preparing the respective TS-1 powder and subsequently, the

respective molding.

**Table 7**

| characteristics of the moldings used in continuous epoxidation | | | | |
|---|---|---|---|---|
| APHA color number of Ti containing compound (tetraethylorthotitanate, $Ti(OEt)_4$) | Molding according to # | $S(H_2O_2)$ to PO [%] | T cooling medium [°C] | $T_{average}$ epoxidation zone [°C] |
| 102 | Example 2 | 93 | 49 | 61 |
| 251 | Example 3 | 93 | 50 | 60 |
| 300 | Example 4 | 85 | 60 | 67 |
| >1000 | Comparative Example 1 | 82 | 62 | 69 |
| >1000 | Comparative Example 2 | 83 | 63 | 69 |

The results of the continuous epoxidation reaction are shown in Figures 4 to 6, wherein the selectivity for propylene oxide relative to hydrogen peroxide ($H_2O_2$) ($S(H_2O_2)$ to PO) was determined according to Reference Example 2 (see Fig. 5 and 6).The experiments showed that the TS-1 catalyst' performance decreased with increasing APHA number of the Ti containing compound that was used for the synthesis of the catalyst powder according to Examples 2-4 and Comparative Examples 1-2. Even if the results of the different TS-1 catalysts appeared comparable during the initial run time, it could be seen that at longer runtimes (such as > 150 h, preferably > 200 h, more preferred > 250 h) a remarkable gap opened: At an APHA number above 300 a much higher temperature in the epoxidation zone (and thus a higher temperature of the cooling medium) was required in order to keep the hydrogen peroxide conversion at a value of ≥ 90% (see Figures 4 and 6). However, at these high APHA numbers of the Ti containing compound, selectivity was at 500 h <84 %. The TS-1 catalyst based on a Ti containing compound having an APHA color number of 300 at least resulted in a selectivity at 500 h of still about 85 %. The TS-1 catalysts based on Ti containing compounds having an APHA color number of < 300 gave remarkably better results at 500 h in that the selectivity was clearly above 92 %.

**Short description of the Figures**

Fig. 1 shows the XRD spectra of the solid obtained in Comparative Example 2 with an enlargement of the section where the anatas related peak is present. 98.5 % of the obtained particles were of TS-1 structure with 1.5 % anatas. The impulse is indicated on the y axis. The 2Theta value is indicated on the x axis.

Fig. 2 shows the Kubelka-Munk-figures, calculated based on % R-spectra, measured with a UV/VIS/NIR spectral photometer Lambda 950 with 150 mm integrating sphere (Ulbrichtkugel) with indication of the lamp switching point, for the titanium silicalite-1 (TS-1) powders of Examples 2-4 and Comparative Examples 1 and 2. The Kubelka-Munk Transformation (KM) is indicated on the y axis versus the wavelength in nanometer on the x axis. The bands above 330 nm (in the range about 330 nm to about 350 nm) indicate the presence of significant amounts of anatas for the samples made from tetraethylorthotitanate with APHA numbers > 300.

Fig. 3 shows the Kubelka-Munk-figures, calculated based on % R-spectra, measured with a UV/VIS/NIR spectral photometer Lambda 950 with 150 mm integrating sphere (Ulbrichtkugel) with indication of the lamp switching point, for the TiMWW powders of Example 6 and Comparative Example 3. The Kubelka-Munk Transformation (KM) is indicated on the y axis versus the wavelength in nanometer on the x axis. The insert on the right side shows in enlarged modus the image section between 0 and 3 on the y axis. The shoulder above 330 nm (in the range about 330 nm to about 350 nm) for Comparative Example 3 indicates the presence of certain amounts of anatas for the sample made from tetrabutylorthotitanate with APHA number > 300.

Fig. 4 shows the results of the continuous epoxidation reaction from Example 7.2, wherein the temperature of the cooling medium is indicated on the y axis in °C and the runtime is indicated on the x axis in °C.

Fig. 5 shows the results of the continuous epoxidation reaction from Example 7.2, wherein the selectivityfor propylene oxide relative to hydrogen peroxide ($S(H_2O_2)$ to PO) was determined according to Reference Example 2 and is indicated on the y axis in %; the runtime is indicated in hours on the x axis.

Fig. 6 shows a compilation of the results of the continuous epoxidation reaction from Example 7.2, wherein selectivity and temperature are indicated on the y axis in % and in °C respectively and the runtime in hours is indicated on the x axis.

**Cited Literature**

- US 2013/296159 A1
- EP 0 712 852 A1
- Deng-Gao Huang, Xian Zhang, Bao-Hui Chen, Zi-Sheng Chao Catalysis Today 158 (2010) 510-514- IN 189381 A
- handbook "Betriebsanleitung der Material-Prüfmaschine", version 1.1, by Zwick Technische Dokumentation, August-Nagel-Strasse 11, D-89079 Ulm, Germany (1999)
- handbook "Register 1: Betriebsanleitung / Sicherheitshandbuch für die Material-Prüfmaschine Z2.5/TS1S ", version 1.5, December 2001 by Zwick GmbH & Co. Technische Dokumentation, August-Nagel-Strasse 11, D-89079 Ulm, Germany
- US 2007/0099299 A1
- Stallmach et al. in Annual Reports on NMR Spectroscopy 2007, Vol. 61, pp. 51-131
- S. Kolitcheff, E. Jolimaitre, A. Hugon, J. Verstraete, M. Rivallan, P-L. Carrette, F. Couenne and M. Tayakout-Fayolle, Catal. Sci. Technol., 2018, 8, page 4537
- F. Elwinger, P. Pourmand, and I. Furo, J. Phys. Chem. C. 2017, 121, pages 13757-13764
- M. Holz, S. R. Heil and A. Sacco. Phys. Chem. Chem. Phys., 2000, 2, pages 4740-4742
- EP 1 122 249 A1
- EP 1 122 249 A1
- WO 2015/049327 A1
- Ullmann's Encyclopedia of Industrial Chemistry, 5th edition, volume A 13 (1989) pages 443-466


**Claims**

1. A zeolitic material of MFI framework type having a framework structure comprising Si, O, and Ti, obtained or obtainable from a Ti containing compound, wherein the Ti containing compound has an APHA color number of ≤ 300, the APHA color number being determined according to DIN EN ISO 6271:2016-05;

   wherein the Ti containing compound comprises a Ti containing alcoholate selected from the group of $Ti(O\text{-}alkyl)_4$, wherein each alkyl group is independently selected from branched or unbranched C1 to C6 alkyl.

2. The zeolitic material of claim 1, wherein the Ti containing compound comprises a Ti containing alcoholate, selected from the group consisting of tetraethyl orthotitanate ($Ti(OEt)_4$), tetraisopropyl orthotitanate ($Ti(OPr)_4$), tetra-n-butyl orthotitanate $Ti(OBu)_4$ and mixtures of two or more of these compounds.

3. The zeolitic material of claim 1 or 2, wherein the Ti containing compound comprises at least 90 weight-%, preferably at least 95 weight-%, more preferably at least 96 weight-%, more preferably at least 97 weight-%, more preferably at least 98 weight-%, more preferably at least 99 weight-% of the Ti containing alcoholate based on the overall weight of the Ti containing compound.

4. The zeolitic material of any one of claims 1 to 3, wherein the Ti containing compound comprises ≤ 10 weight-%, preferably ≤ 5 weight-%, more preferably ≤ 4 weight-%, more preferably ≤ 3 weight-%, more preferably ≤ 2 weight-%, more preferably ≤ 1 weight-%, based on the overall weight of the Ti containing compound, of a substance of formula (I)

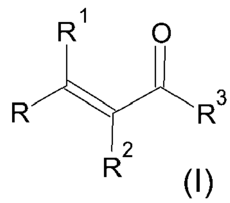

(I)

wherein R, $R^1$ and $R^2$ are independently selected from the group consisting of hydrogen atom and branched or unbranched C1 to C6 alkyl, and $R^3$ is selected from the group consisting of hydrogen atom, branched or unbranched C1 to C6 alkyl, and branched or unbranched C1 to C6 alkenyl; wherein the substance of formula (I) is preferably selected from the group of $CH_3$-CH=CH-C(=O)-CH=CH-$CH_3$ (hepta-2,5-dien-4-on), $(CH_3)_2$C=CH-C(=O)-CH=C$(CH_3)_2$ (phorone, 2,6-dimethyl-hepta-2,5-dien-4-on) and mixtures of hepta-2,5-dien-4-on and 2,6-dimethyl-hepta-2,5-dien-4-on.

5. The zeolitic material of any one of claims 1 to 4, wherein the Ti containing compound has an APHA color number of $\leq$ 290, preferably the APHA color number is $\leq$ 280, more preferably the APHA color number is $\leq$ 270, more preferably the APHA color number is $\leq$ 260, more preferably the APHA color number is $\leq$ 251, more preferably the APHA color number is $\leq$ 250, more preferably the APHA color number is $\leq$ 200, more preferably the APHA color number is $\leq$ 150, more preferably the APHA color number is $\leq$ 105

6. A process for preparation of a zeolitic material of MFI framework type having a framework structure comprising Si, O, and Ti, the process comprising:

a) preparing a mixture comprising one or more sources of Si, one or more Ti containing compound(s), and one or more structure directing agent(s), and water; or
a') preparing a mixture comprising one or more sources of Si, a reaction product from pre-mixing one or more Ti containing compound(s) and one or more structure directing agent(s), and water;
b) feeding the mixture prepared in (a) or (a') into a reactor; and
c) crystallizing the zeolitic material having a framework structure comprising Si, O, and Ti, from the mixture in the reactor, wherein the mixture is heated to a temperature in the range of from 70 to 300°C;

wherein the one or more Ti containing compound(s) have an APHA color number of $\leq$ 300, the APHA color being determined according to DIN EN ISO 6271:2016-05, and comprise a Ti containing alcoholate selected from the group of Ti(O-alkyl)$_4$, wherein each alkyl group is independently selected from branched or unbranched C1 to C6 alkyl.

7. A molding comprising a zeolitic material of MFI framework type having a framework structure comprising Si, O, and Ti according to any one of claims 1 to 5.

8. Use of a molding according to claim 7 as an adsorbent, an absorbent, a catalyst or a catalyst component, preferably as a catalyst or as a catalyst component, more preferably as a Lewis acid catalyst or a Lewis acid catalyst component, as an isomerization catalyst or as an isomerization catalyst component, as an oxidation catalyst or as an oxidation catalyst component, as an aldol condensation catalyst or as an aldol condensation catalyst component, or as a Prins reaction catalyst or as a Prins reaction catalyst component.

9. A process for oxidizing an organic compound comprising bringing an organic compound in contact, preferably in continuous mode, with a catalyst comprising a molding according to claim 7, preferably for epoxidizing an organic compound, more preferably for epoxidizing an organic compound having at least one C-C double bond, preferably a C2-C10 alkene, more preferably a C2-C5 alkene, more preferably a C2-C4 alkene, more preferably a C2 or C3 alkene, more preferably propene.

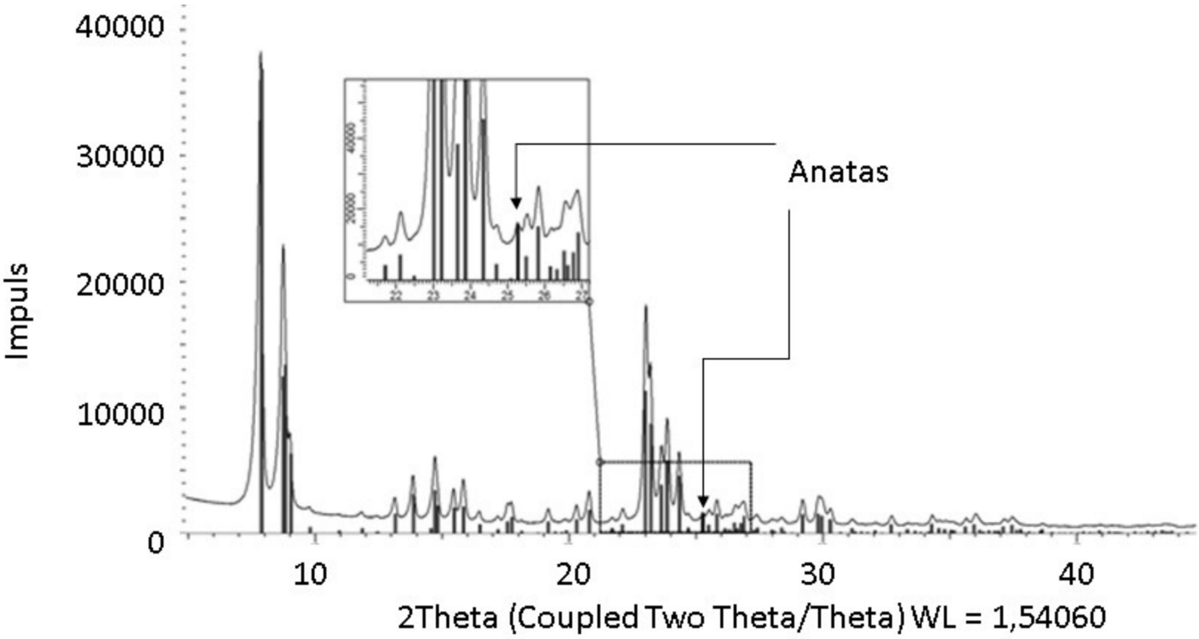
40000
30000
20000
10000
0
Impuls
10
20
30
40
2Theta (Coupled Two Theta/Theta) WL = 1,54060
Anatas

Fig. 1

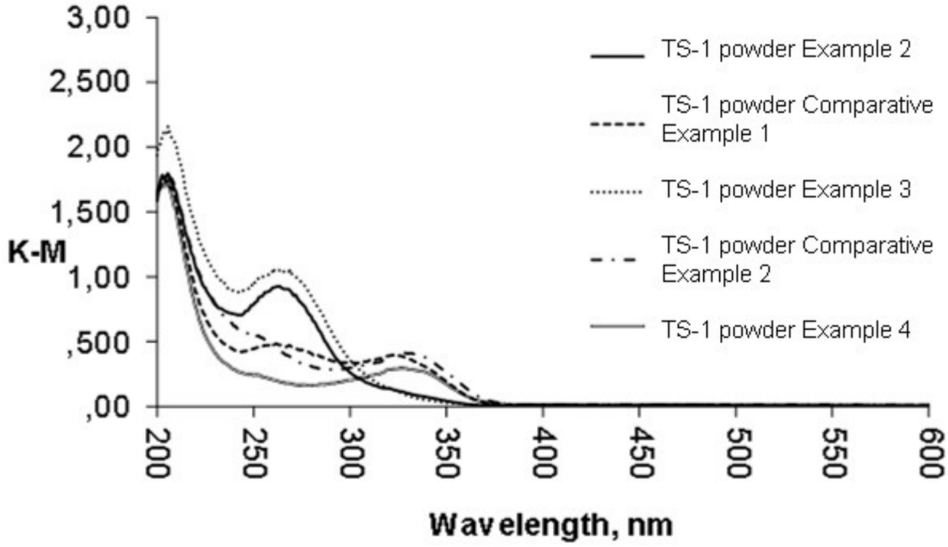
3,00
2,500
2,00
1,500
1,00
,500
,00
K-M
200
250
300
350
400
450
500
550
600
Wavelength, nm
TS-1 powder Example 2
TS-1 powder Comparative Example 1
TS-1 powder Example 3
TS-1 powder Comparative Example 2
TS-1 powder Example 4

Fig. 2

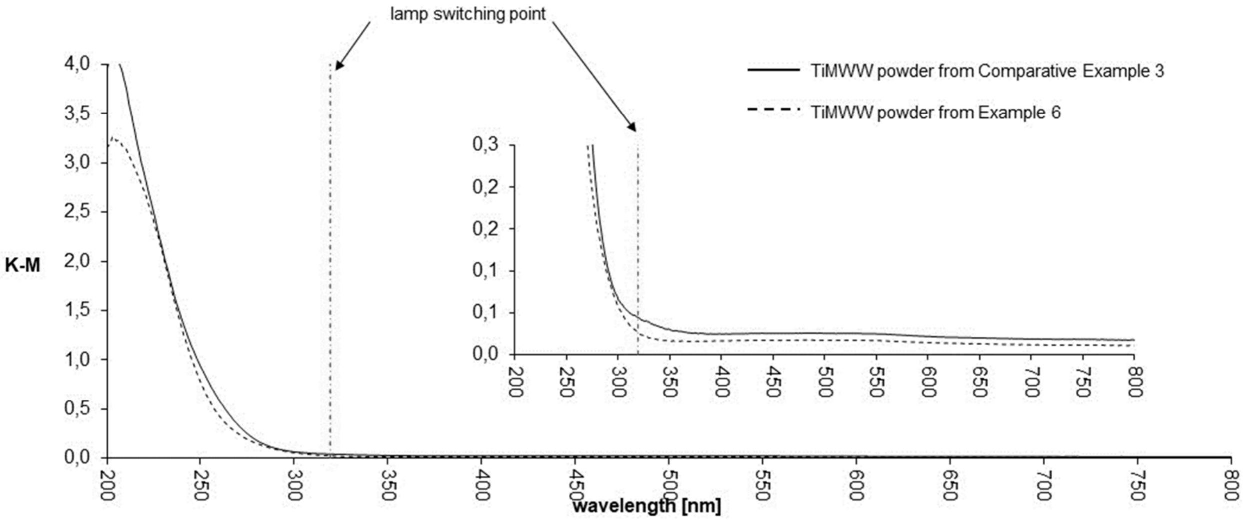
lamp switching point
TiMWW powder from Comparative Example 3
TiMWW powder from Example 6
K-M
4,0
3,5
3,0
2,5
2,0
1,5
1,0
0,5
0,0
200
250
300
350
400
450
500
550
600
650
700
750
800
wavelength [nm]
0,3
0,2
0,2
0,1
0,1
0,0

Fig. 3

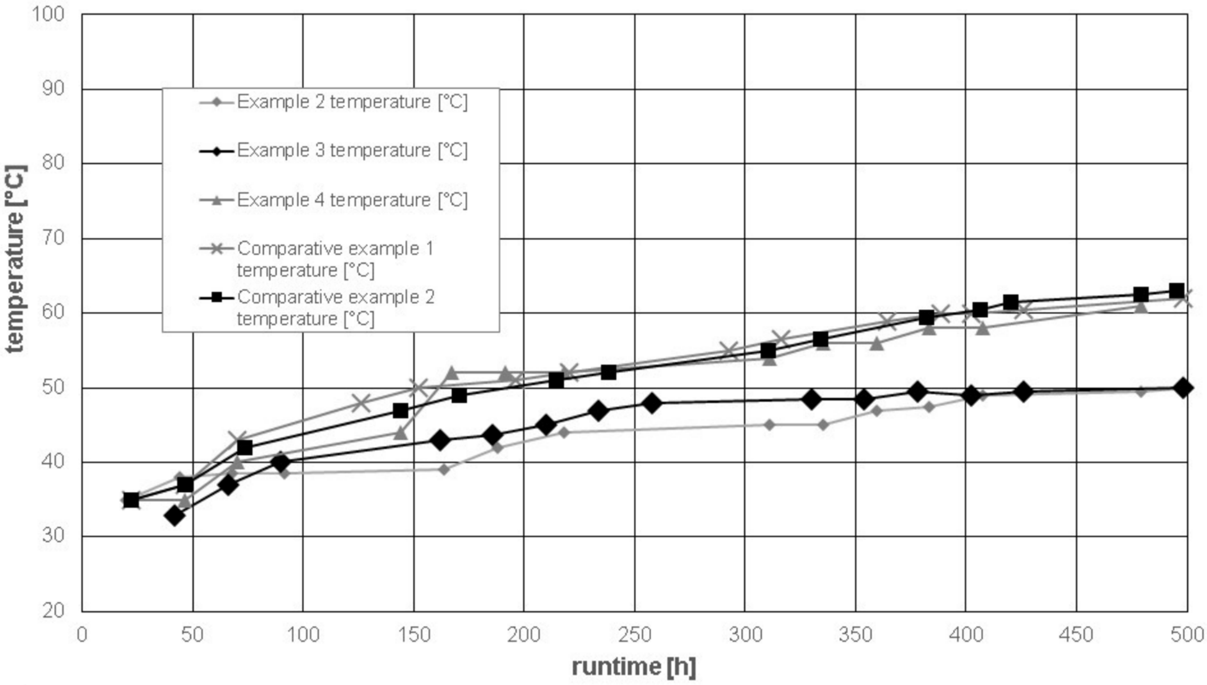
100
90
80
70
60
50
40
30
20
temperature [°C]
0
50
100
150
200
250
300
350
400
450
500
runtime [h]
Example 2 temperature [°C]
Example 3 temperature [°C]
Example 4 temperature [°C]
Comparative example 1 temperature [°C]
Comparative example 2 temperature [°C]

Fig. 4

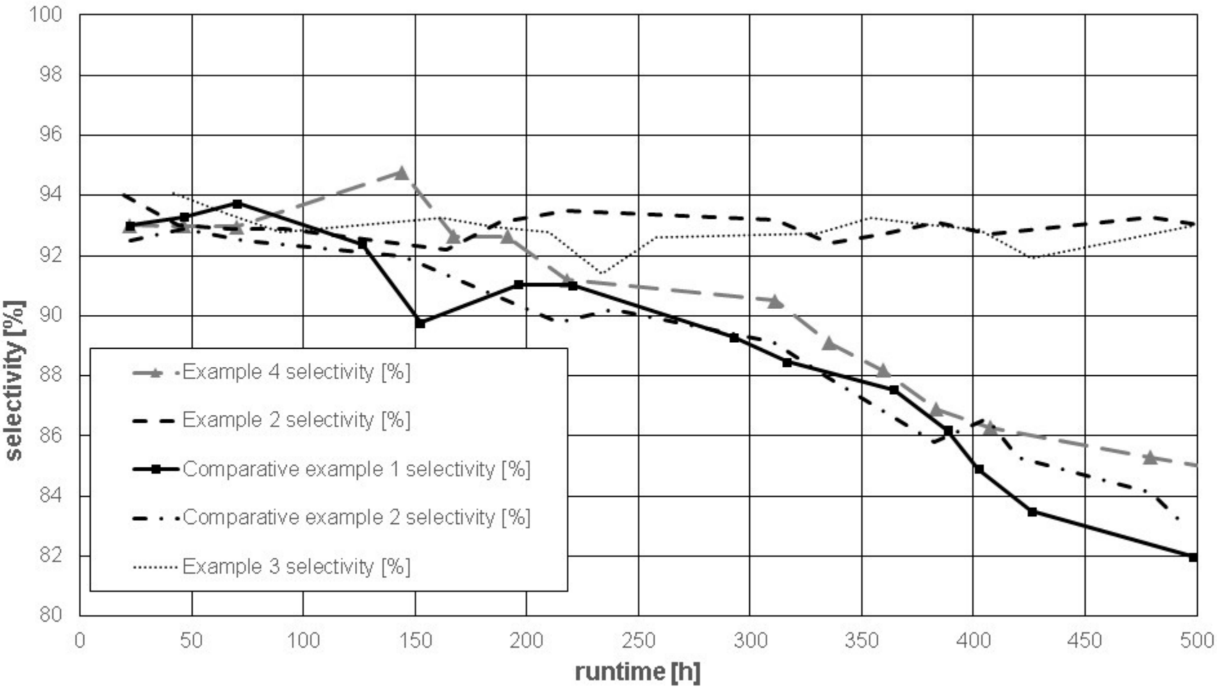
100
98
96
94
92
90
88
86
84
82
80
selectivity [%]
0
50
100
150
200
250
300
350
400
450
500
runtime [h]
Example 4 selectivity [%]
Example 2 selectivity [%]
Comparative example 1 selectivity [%]
Comparative example 2 selectivity [%]
Example 3 selectivity [%]

Fig. 5

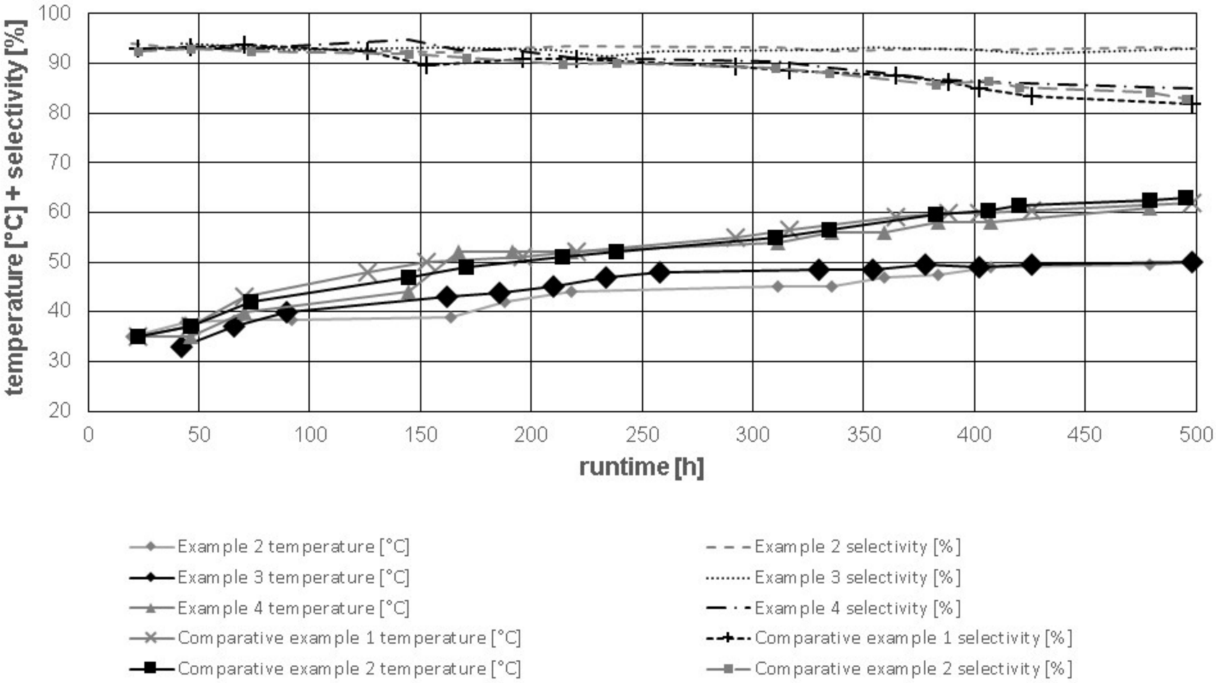
temperature [°C] + selectivity [%]
runtime [h]
100
90
80
70
60
50
40
30
20
0
50
100
150
200
250
300
350
400
450
500
Example 2 temperature [°C]
Example 3 temperature [°C]
Example 4 temperature [°C]
Comparative example 1 temperature [°C]
Comparative example 2 temperature [°C]
Example 2 selectivity [%]
Example 3 selectivity [%]
Example 4 selectivity [%]
Comparative example 1 selectivity [%]
Comparative example 2 selectivity [%]

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2013296159 A1
- EP 0712852 A1
- IN 189381 A
- EP 1122249 A1
- WO 2015049327 A1
- US 20070099299 A1
- US 20070099299 A

### Non-patent literature cited in the description


- **DENG-GAO HUANG** ; **XIAN ZHANG** ; **BAO-HUI CHEN** ; **ZI-SHENG CHAO**. *Catalysis Today*, 2010, vol. 158, 510-514
- Ullmann's Encyclopedia of Industrial Chemistry. 1989, vol. A 13, 443-466
- **S. KOLITCHEFF** ; **E. JOLIMAITRE** ; **A. HUGON** ; **J. VERSTRAETE** ; **M. RIVALLAN** ; **P-L. CARRETTE** ; **F. COUENNE** ; **M. TAYAKOUT-FAYOLLE**. *Catal. Sci. Technol.*, 2018, vol. 8, 4537
- **F. ELWINGER** ; **P. POURMAND** ; **I. FURO**. *J. Phys. Chem. C.*, 2017, vol. 121, 13757-13764
- **M. HOLZ** ; **S. R. HEIL** ; **A. SACCO**. *Phys. Chem. Chem. Phys.*, 2000, vol. 2, 4740-4742
- Betriebsanleitung der Material-Prüfmaschine. Zwick Technische Dokumentation, 1999
- Register 1: Betriebsanleitung / Sicherheitshandbuch für die Material-Prüfmaschine Z2.5/TS1S. Zwick GmbH & Co. Technische Dokumentation, December 2001
- **STALLMACH et al.** *Annual Reports on NMR Spectroscopy*, 2007, vol. 61, 51-131